# EUROPEAN PATENT APPLICATION

(11) **EP 4 598 228 A1**
(43) Date of publication of application: **06.08.2025**
(21) Application number: 23873263.0
(22) Date of filing: 27.09.2023
(51) Int. Cl.: H04W 72/232, H04W 72/04, H04W 72/231, H04W 72/21, H04W 72/11, H04W 72/12, H04L 1/00, H04L 1/18, H04L 5/00

(54) **METHOD, USER EQUIPMENT, PROCESSING DEVICE, AND STORAGE MEDIUM FOR TRANSMITTING HARQ-ACK INFORMATION, AND METHOD AND BASE STATION FOR RECEIVING HARQ-ACK INFORMATION**

(30) Priority: 29.09.2022 US 202263411596 P; 16.02.2023 US 202363446342 P; 22.05.2023 US 202363468263 P; 10.08.2023 KR 20230105128
(71) Applicant: LG Electronics Inc., Yeongdeungpo-gu Seoul 07336 (KR)
(72) Inventor: BAE, Duckhyun, Seoul 06772 (KR); KIM, Jaehyung, Seoul 06772 (KR); LEE, Youngdae, Seoul 06772 (KR); YANG, Suckchel, Seoul 06772 (KR); KIM, Seonwook, Seoul 06772 (KR)
(74) Representative: Maikowski & Ninnemann Patentanwälte Partnerschaft mbB
(86) International application number: PCT/KR2023/015124
(87) International publication number: WO 2024/072156

(57) **Abstract**

A UE may: receive a DCI format that schedules N PDSCH receptions, where N>1; determine HARQ-ACK information bits for the N PDSCH receptions on the basis of the DCI format; and transmit the HARQ-ACK information on the basis of the HARQ-ACK information bits. The N PDSCH receptions may be divided into X PDSCH groups, where X<N, and HARQ-ACK information for each PDSCH group may be transmitted from a slot determined by applying K1 on the basis of the last PDSCH reception within the corresponding PDSCH group.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

A method to efficiently support various services with different requirements in a wireless communication system is also needed.

Further, overcoming delay or latency is an important challenge to applications, performance of which is sensitive to delay/latency.

An efficient multi-slot scheduling method is required.

An efficient HARQ-ACK feedback method for multi-slot scheduling is required.

Further, a method of efficiently transmitting data packets in which jitter may occur in a wireless communication system is needed.

The objects to be achieved with the present disclosure are not limited to what has been particularly described hereinabove and other objects not described herein will be more clearly understood by persons skilled in the art from the following detailed description.

### Technical Solution

According to an aspect of the present disclosure, a method of transmitting hybrid automatic repeat request acknowledgement (HARQ-ACK) information by a user equipment (UE) in a wireless communication system is provided. The method includes receiving a downlink control information (DCI) format for scheduling N physical downlink shared channel (PDSCH) receptions, where N>1, determining HARQ-ACK information bits for the N PDSCH receptions based on the DCI format, and transmitting the HARQ-ACK information based on the HARQ-ACK information bits, and in this case, the N PDSCH receptions are divided into X PDSCH groups, where X<N, and the transmitting of the HARQ-ACK information includes transmitting HARQ-ACK information for each PDSCH group in a slot determined by applying K1 based on a last PDSCH reception in a corresponding PDSCH group.

According to another aspect of the present disclosure, a user equipment (UE) for transmitting hybrid automatic repeat request acknowledgement (HARQ-ACK) information in a wireless communication system is provided. The UE includes at least one transceiver, at least one processor, and at least one computer memory operably connected to the at least one processor and storing instructions that, when executed, cause the at least one processor to perform operations. The operations include receiving a downlink control information (DCI) format for scheduling N physical downlink shared channel (PDSCH) receptions, where N>1, determining HARQ-ACK information bits for the N PDSCH receptions based on the DCI format, and transmitting the HARQ-ACK information based on the HARQ-ACK information bits, and in this case, the N PDSCH receptions are divided into X PDSCH groups, where X<N, and the transmitting of the HARQ-ACK information includes transmitting HARQ-ACK information for each PDSCH group in a slot determined by applying K1 based on a last PDSCH reception in a corresponding PDSCH group.

According to a further aspect of the present disclosure, a processing device in a wireless communication system is provided. The processing device includes at least one processor, and at least one computer memory operably connected to the at least one processor and storing instructions that, when executed, cause the at least one processor to perform operations. The operations include receiving a downlink control information (DCI) format for scheduling N physical downlink shared channel (PDSCH) receptions, where N>1, determining HARQ-ACK information bits for the N PDSCH receptions based on the DCI format, and transmitting HARQ-ACK information based on the HARQ-ACK information bits, and in this case, the N PDSCH receptions are divided into X PDSCH groups, where X<N, and the transmitting of the HARQ-ACK information includes transmitting HARQ-ACK information for each PDSCH group in a slot determined by applying K1 based on a last PDSCH reception in a corresponding PDSCH group.

According to a still further aspect of the present disclosure, a computer-readable storage medium is provided. The storage medium stores at least one computer program code including instructions that, when executed, cause at least one processor to perform operations, the operations include receiving a downlink control information (DCI) format for scheduling N physical downlink shared channel (PDSCH) receptions, where N>1, determining HARQ-ACK information bits for the N PDSCH receptions based on the DCI format, and transmitting HARQ-ACK information based on the HARQ-ACK information bits, and in this case, the N PDSCH receptions are divided into X PDSCH groups, where X<N, and the transmitting of the HARQ-ACK information includes transmitting HARQ-ACK information for each PDSCH group in a slot determined by applying K1 based on a last PDSCH reception in a corresponding PDSCH group.

According to a still further aspect of the present disclosure, a method of receiving hybrid automatic repeat request acknowledgement (HARQ-ACK) information by a base station (BS) in a wireless communication system is provided. The method includes transmitting a downlink control information (DCI) format for scheduling N physical downlink shared channel (PDSCH) receptions, where N>1, and receiving HARQ-ACK information bits for the N PDSCH receptions based on the DCI format, and in this case, the N PDSCH receptions are divided into X PDSCH groups, where X<N, and the receiving of the HARQ-ACK information includes receiving HARQ-ACK information for each PDSCH group in a slot determined by applying K1 based on a last PDSCH reception in a corresponding PDSCH group.

According to a still further aspect of the present disclosure, a BS for receiving hybrid automatic repeat request acknowledgement (HARQ-ACK) information in a wireless communication system is provided. The BS includes at least one transceiver, at least one processor, and at least one computer memory operably connected to the at least one processor and storing instructions that, when executed, cause the at least one processor to perform operations. The operations include transmitting a downlink control information (DCI) format for scheduling N physical downlink shared channel (PDSCH) transmissions, where N>1, and receiving HARQ-ACK information bits for the N PDSCH transmissions based on the DCI format, and in this case, the N PDSCH receptions are divided into X PDSCH groups, where X<N, and the receiving of the HARQ-ACK information includes receiving HARQ-ACK information for each PDSCH group in a slot determined by applying K1 based on a last PDSCH transmission in a corresponding PDSCH group.

According to each aspect of the present disclosure, a HARQ-ACK response period k may be determined based on the DCI format. The HARQ-ACK information for each PDSCH group may be transmitted every PDSCH group ofk PDSCH receptions.

According to each aspect of the present disclosure, the DCI format may include a PRI field, and the HARQ-ACK information for each PDSCH group may be transmitted using a PUCCH resource determined based on a value of the PRI field.

According to each aspect of the present disclosure, the DCI format may include information regarding the number X of PRIs. HARQ-ACK information for an i-th PDSCH group from among the X PDSCH groups may be transmitted based on a PUCCH resource for the i-th PDSCH group. The PUCCH resource for the i-th PDSCH group may be determined based on the (i mod Y)-th PRI value within a predetermined PRI sequence of length Y.

According to each aspect of the present disclosure, the DCI format may include a PRI field, and the PRI field may include a value indicating the PRI sequence configured by higher layer signaling.

The foregoing solutions are merely a part of the examples of the present disclosure and various examples into which the technical features of the present disclosure are incorporated may be derived and understood by persons skilled in the art from the following detailed description.

### ADVANTAGEOUS EFFECTS

According to some implementations of the present disclosure, a wireless communication signal may be efficiently transmitted/received. Accordingly, the total throughput of a wireless communication system may be raised.

According to some implementations of the present disclosure, various services with different requirements may be efficiently supported in a wireless communication system.

According to some implementations of the present disclosure, delay/latency generated during radio communication between communication devices may be reduced.

According to some implementations of the present disclosure, efficient multi-slot scheduling may be achieved.

According to some implementations of the present disclosure, HARQ-ACK responses to PDSCH receptions based on one scheduling message may be transmitted multiple times, thereby ensuring lower delay.

According to some implementations of the present disclosure, data packets that may be subject to jitter may be transmitted efficiently in a wireless communication system.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates an example of physical downlink shared channel (PDSCH) time domain resource assignment (TDRA) caused by a physical downlink control channel (PDCCH) and an example of physical uplink shared channel (PUSCH) TDRA caused by the PDCCH;
FIG. 7 illustrates a hybrid automatic repeat request-acknowledgement (HARQ-ACK) transmission/reception procedure;
FIG. 8 illustrates a signal transmission/reception flow between a UE and a BS according to some implementations of the present disclosure.
FIG. 9 shows an example of HARQ-ACK feedback for multi-slot scheduling by one scheduling message.
FIGS. 10 to 14 illustrate examples of HARQ-ACK feedback according to some implementations of the present disclosure.
FIG. 15 illustrates an uplink signal transmission flow of a UE according to some implementations of the present disclosure, and
FIG. 16 illustrates an uplink signal reception flow of a BS according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH cell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal block (SSB), DMRS, CSI-RS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to as a new RAT (NR) or fifth-generation (5G) RAT, and a system using NR or supporting NR is referred to as an NR system.

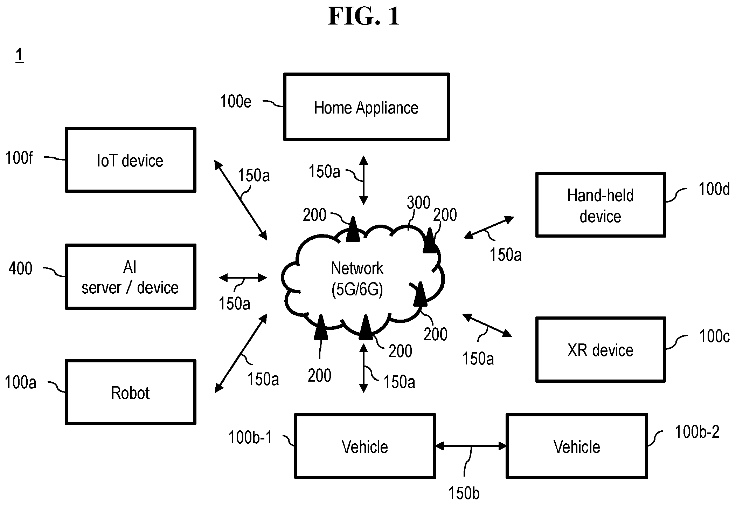

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

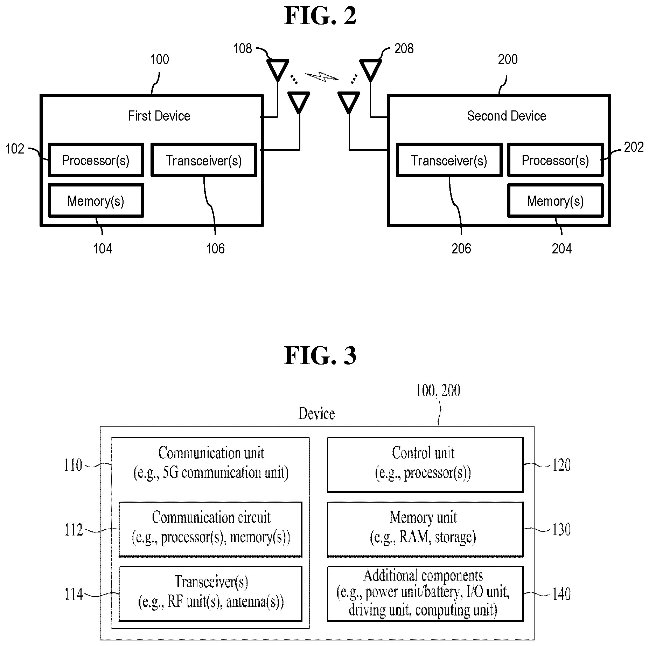

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

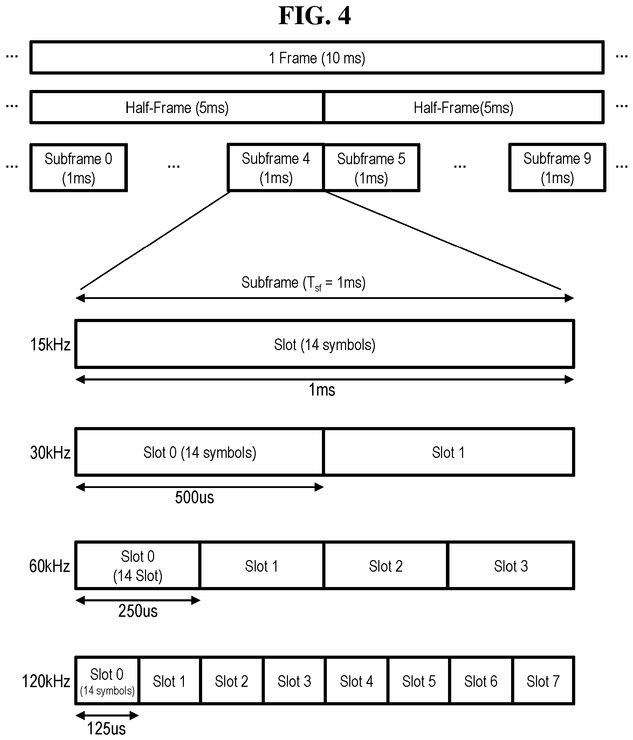

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of Tr = (△fₘₐₓ*N_{f}/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f}= 4096. For reference, a basic time unit for LTE is Tₛ = 1/(△f_{ref}*N_{f,ref}) where △f_{ref} = 15*10³ Hz and N_{f,ref}= 2048. T_{c} and T_{f} have the relationship of a constant κ = T_{c}/T_{f}= 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subtrame,u}ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u}*15 kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ... , n^{subframe,u}ₛₗₒₜ - 1} and indexed within a frame in ascending order as follows: n^{u}_{s,f} ∈ {0, ..., n^{frame,u}ₛₗₒₜ - 1}.

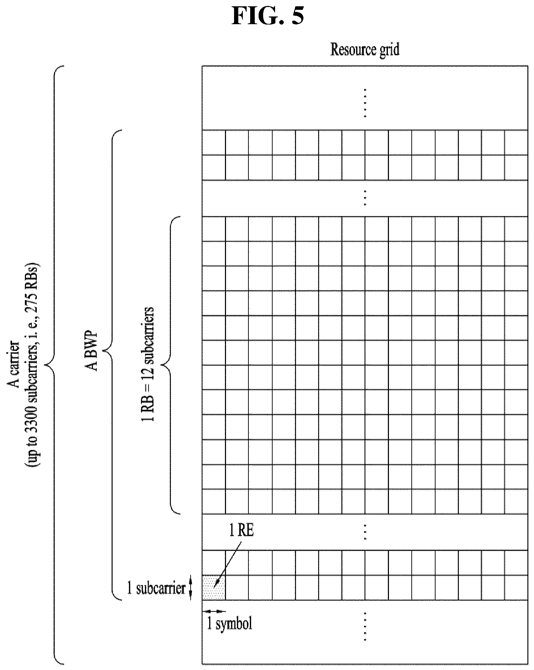

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) *N*^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration *u* is given to the UE by a higher layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u.* The center of subcarrier 0 of CRB 0 for the subcarrier spacing configuration *u* is equal to 'Point A' which serves as a common reference point for RB grids. The PRBs for subcarrier spacing configuration u are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth,* which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

The UE for which carrier aggregation is configured may be configured to use one or more cells. If the UE is configured with a plurality of serving cells, the UE may be configured with one or multiple cell groups. The UE may also be configured with a plurality of cell groups associated with different BSs. Alternatively, the UE may be configured with a plurality of cell groups associated with a single BS. Each cell group of the UE includes one or more serving cells and includes a single PUCCH cell for which PUCCH resources are configured. The PUCCH cell may be a Pcell or an Scell configured as the PUCCH cell among Scells of a corresponding cell group. Each serving cell of the UE belongs to one of cell groups of the UE and does not belong to a plurality of cells.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to a HARQ-ACK codebook. In particular, a bit sequence in which HARQ-ACK information bits are arranged according to a predetermined rule is called a HARQ-ACK codebook.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.
- Link recovery request (LRR)

In the present disclosure, for convenience, PUCCH resources configured/indicated for/to the UE by the BS for HARQ-ACK, SR, and CSI transmission are referred to as a HARQ-ACK PUCCH resource, an SR PUCCH resource, and a CSI PUCCH resource, respectively.

A scheduling request (SR) is used for the UE to request UL-SCH resources for a (new) transmission. A MAC entity in the MAC layer above the PHY layer may be configured with zero, one, or more SR configurations. An SR configuration includes a set of PUCCH resources for an SR across different BWPs. To accommodate different types of data transfer services, a plurality of types of logical channels are defined, each supporting a specific type of information. The MAC entity supports mapping between logical channels and transport channels (e.g., UL-SCH and DL SCH). For a logical channel, at most one PUCCH resource for an SR is configured per BWP. For a logical channel, for example, an SR configuration applicable to the logical channel may be indicated to the UE by the ID of the SR configuration. Each SR configuration corresponds to one or more logical channels. Each logical channel may be mapped to zero or more SR configurations, which are configured by RRC signaling from the network. If an SR is triggered, the MAC entity has an SR TO on a valid PUCCH resource configured for the SR, an SR prohibit timer is not running at the time of the SR TO, and the PUCCH resource for the SR TO does not overlap with a measurement gap or with a UL-SCH resource (e.g., a PUSCH resource), the MAC entity instructs the PHY layer below the MAC layer to signal the SR on one valid PUCCH resource for the SR. If, for a logical channel belonging to a logical channel group including the one or more logical channels, UL data is available to the MAC entity and if there is no UL resource available for a new transmission, the SR may be triggered.

The UE is configured, by a higher-layer (e.g., RRC) parameter *SchedulingRequestResourceConfig* provided by the network, with a set of configurations for an SR in a PUCCH transmission using either PUCCH format 0 or PUCCH format 1. The higher-layer (e.g., RRC) parameter *SchedulingRequestResourceConfig* may include a parameter *SchedulingRequestResourceld* identifying an SR resource on a PUCCH, a parameter *SchedulingRequestId* indicating the ID of an SR configuration using the SR resource, and a parameter *periodicityAndOffse* indicating an SR periodicity and an SR offset. The parameter *SchedulingRequestResourceConfig* may include the ID of a PUCCH resource on which the UE will transmit the SR. The UE is configured with the PUCCH resource by the higher-layer parameter *SchedulingRequestResourceld* providing a PUCCH format 0 resource or a PUCCH format 1 resource. The UE is also configured with a periodicity *SR*_{PERIODICITY} in symbols or slots and an offset *SR*_{OFFSET} in slots by the higher-layer parameter *periodicityAndOffset* of the network for a PUCCH transmission conveying the SR. If *SR*_{PERIODICITY} is larger than one slot, the UE may determine the SR TO in the PUCCH to be in a slot with number *N*^{u}_{s,f} in a frame with number n_{f} if (n_{f}*N^{frame,u}ₛₗₒₜ + n^{u}_{s,f} - *SR*_{OFFSET})mod*SR*_{PERIODICITY} = 0. If *SR*_{PERIODICITY} is one slot, the UE expects that *SR*_{OFFSET}=0 and every slot is an SR TO in the PUCCH. If *SR*_{PERIODICITY} is smaller than one slot, the UE determines the SR TO in the PUCCH to start in a symbol with index *l* if (*l* - *l*₀mod*SR*_{PERIODICITY})mod*SR*_{PERIODICITY} = 0 where *l*₀ is the index of the starting symbol of the corresponding PUCCH format. According to some scenarios (e.g., 3GPP TS 38.213 Rel-15), the UE transmits a PUCCH in a PUCCH resource for a corresponding SR configuration only when the UE transmits a positive SR. Further, according to some scenarios (e.g., 3GPP TS 38.213 Rel-150), the UE is configured to transmit K PUCCHs for respective K SRs in a slot, as determined by a set of *SchedulingRequestResourceId,* with SR TOs that would overlap with a PUCCH transmission with HARQ-ACK information from the UE in the slot or with a PUCCH transmission with CSI report(s) from the UE in the slot.

For example, if the UE would transmit a PUCCH with O_{ACK} HARQ-ACK information bits in a resource using PUCCH format 2 or PUCCH format 3 or PUCCH format 4 in a slot, ceil {log₂(K+1)} bits representing a negative or positive SR are appended to the HARQ-ACK information bits in ascending order of the values of *SchedulingRequestResourceId,* and the UE transmits the combined UCI bits on a PUCCH using a resource with PUCCH format 2 or PUCCH format 3 or PUCCH format 4 for transmission of HARQ-ACK information bits. An all-zero value for the ceil{log₂(K+1)} bits represents a negative SR value across all K SRs.

In another example, if the UE would transmit periodic/semi-persistent CSI in a resource using PUCCH format 2 or PUCCH format 3 or PUCCH format 4 in a slot, ceil{log₂(K+1)} bits representing the corresponding negative or positive SR are prepended to the periodic/semi-persistent CSI bits in ascending order of the values of *SchedulingRequestResourceId,* and the UE transmits a PUCCH with the combined UCI bits in a resource with PUCCH format 2 or PUCCH format 3 or PUCCH format 4 for CSI reporting.

PUCCH formats may be defined as follows according to UCI payload sizes and/or transmission lengths (e.g., the number of symbols included in PUCCH resources). In regard to the PUCCH formats, reference may also be made to Table 4.

### (0) PUCCH format 0 (PF0 or F0)

- Supported UCI payload size: up to K bits (e.g., K=2)
- Number of OFDM symbols constituting a single PUCCH: 1 to X symbols (e.g., X=2)
- Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
- Configuration for PUCCH format 0 includes the following parameters for a corresponding PUCCH resource: an index for initial cyclic shift, the number of symbols for PUCCH transmission, and/or the first symbol for PUCCH transmission.

### (1) PUCCH format 1 (PF1 or F1)

- Supported UCI payload size: up to K bits (e.g., K=2)
- Number of OFDM symbols constituting a single PUCCH: Y to Z symbols (e.g., Y=4 and Z=14)
- Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
- Configuration for PUCCH format 1 includes the following parameters for a corresponding PUCCH resource: an index for initial cyclic shift, the number of symbols for PUCCH transmission, the first symbol for PUCCH transmission, and/or an index for the OCC.

### (2) PUCCH format 2 (PF2 or F2)

- Supported UCI payload size: more than K bits (e.g., K=2)
- Number of OFDM symbols constituting a single PUCCH: 1 to X symbols (e.g., X=2)
- Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
- Configuration for PUCCH format 2 includes the following parameters for a corresponding PUCCH resource: the number of PRBs, the number of symbols for PUCCH transmission, and/or the first symbol for PUCCH transmission.

### (3) PUCCH format 3 (PF3 or F3)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).

Configuration for PUCCH format 3 includes the following parameters for a corresponding PUCCH resource: the number of PRBs, the number of symbols for PUCCH transmission, and/or the first symbol for PUCCH transmission.

### (4) PUCCH format 4 (PF4 or F4)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
- Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

**Table 4**

| PUCCH format | Length in OFDM symbols N^{PUCCH}_{symb} | Number of bits | Usage | Etc. |
|---|---|---|---|---|
| 0 | 1 - 2 | =<2 | HARQ, SR | Sequence selection |
| 1 | 4 - 14 | =<2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM(no UE multiplexing) |
| 4 | 4 - 14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, NUCI.
- PUCCH resource set #0, if the number of UCI bits =< 2
- PUCCH resource set #1, if 2< the number of UCI bits =< N₁
- PUCCH resource set #(K-1), if N_{K-2} < the number of UCI bits =< N_{K-1}

Here, K represents the number of PUCCH resource sets (K>1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4 (see Table 4).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

Hereinafter, resource allocation by the PDCCH and resource allocation by RRC will be described in more detail.

### * Resource Allocation by PDCCH: dynamic grant/assignment

The PDCCH may be used to schedule DL transmission on the PDSCH and UL transmission on the PUSCH. DCI on the PDCCH for scheduling DL transmission may include DL resource assignment that at least includes a modulation and coding format (e.g., modulation and coding scheme (MCS)) index *I*_{MCS}), resource allocation, and HARQ information, associated with a DL-SCH. DCI on the PDCCH for scheduling UL transmission may include a UL scheduling grant that at least includes a modulation and coding format, resource allocation, and HARQ information, associated with a UL-SCH. HARQ information on a DL-SCH or UL-SCH may include a new information indicator (NDI), transport block size (TBS), redundancy version (RV), and HARQ process ID (i.e., HARQ process number). The size and usage of the DCI carried by one PDCCH differs according to a DCI format. For example, DCI format 0_0, DCI format 0_1, or DCI format 0_2 may be used to schedule the PUSCH, and DCI format 1_0, DCI format 1_1, or DCI format 1_2 may be used to schedule the PDSCH. Particularly, DCI format 0_2 and DCI format 1_2 may be used to schedule transmission having higher transmission reliability and lower latency requirements than transmission reliability and latency requirement guaranteed by DCI format 0_0, DCI format 0_1, DCI format 1_0, or DCI format 1_1. Some implementations of the present disclosure may be applied to UL data transmission based on DCL format 0_2. Some implementations of the present disclosure may be applied to DL data reception based on DCI format 1_2.

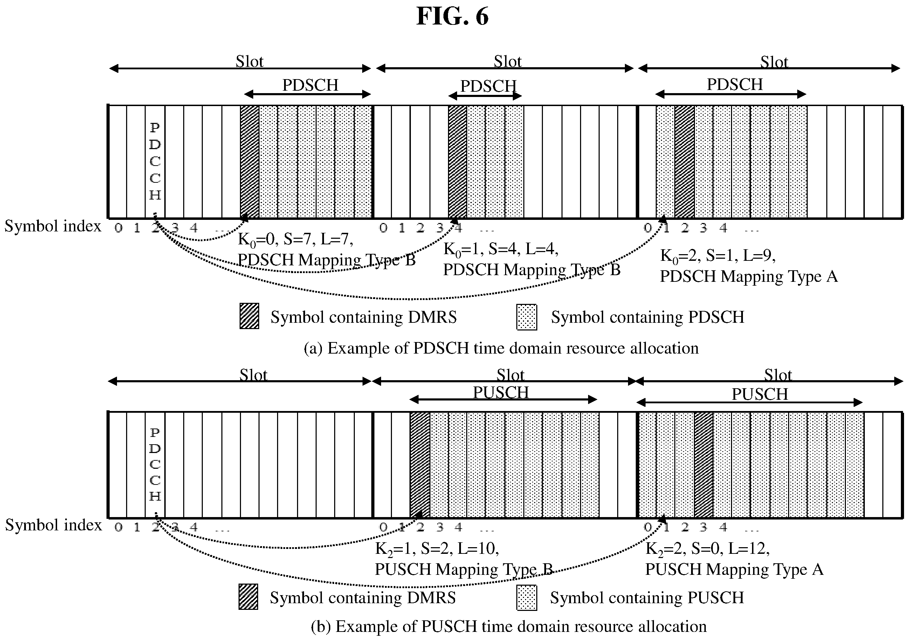

FIG. 6 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value m for a row index m+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator value *SLIV* (or directly, a start position (e.g., start symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., start symbol index *S*) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the start symbol *S* relative to the start of the slot with the PDSCH or PUSCH and the number of consecutive symbols, *L,* counting from the symbol *S.* There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in the present disclosure, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

### * Resource Allocation by RRC

As mentioned above, there are two types of transmission without dynamic grant: configured grant Type 1 and configured grant Type 2. In configured grant Type 1, a UL grant is provided by RRC and stored as a configured UL grant. In configured grant Type 2, the UL grant is provided by the PDCCH and stored or cleared as the configured UL grant based on L1 signaling indicating configured UL grant activation or deactivation. Type 1 and Type 2 may be configured by RRC per serving cell and per BWP. Multiple configurations may be active simultaneously on different serving cells.

When configured grant Type 1 is configured, the UE may be provided with the following parameters through RRC signaling:
- *cs-RNTI* corresponding to a CS-RNTI for retransmission;
- *periodicity* corresponding to a periodicity of configured grant Type 1;
- *timeDomainOffset* indicating an offset of a resource with respect to system frame number (SFN) = 0 in the time domain;
- *timeDomainAllocation* value *m* that provides a row index m+1 pointing to the allocation table, indicating a combination of the start symbol S, the length *L*, and the PUSCH mapping type;
- *frequencyDomainAllocation* that provides frequency domain resource allocation; and
- *mcsAndTBS* that provides *I*_{MCS} indicating a modulation order, a target code rate, and a transport block size.

Upon configuration of configured grant Type 1 for a serving cell by RRC, the UE stores the UL grant provided by RRC as a configured UL grant for an indicated serving cell and initializes or re-initializes the configured UL grant to start in a symbol according to *timeDomainOffset and* S (derived from *SLIV)* and to recur with *periodicity.* After the UL grant is configured for configured grant Type 1, the UE may consider that the UL grant recurs in association with each symbol satisfying: [(SFN * *numberOfSlotsPerFrame* (*numberOfSymbolsPerSlot*) + (slot number in the frame ** numberOfSymbolsPerSlot*) + symbol number in the slot] = *(timeDomainOffset * numberOfSymbolsPerSlot + S +* N ** periodicity*) modulo (1024 ** numberOfSlotsPerFrame * numberOfSymbolsPerSlot*)*,* for all N >= 0, where *numberOfSlotsPerFrame* and *numberOfSymbolsPerSlot* indicate the number of consecutive slots per frame and the number of consecutive OFDM symbols per slot, respectively (refer to Table 1 and Table 2).

For configured grant Type 2, the UE may be provided with the following parameters by the BS through RRC signaling:
*- cs-RNTI* corresponding to a CS-RNTI for activation, deactivation, and retransmission; and
   - *periodicity* that provides a periodicity of configured grant Type 2.

An actual UL grant is provided to the UE by the PDCCH (addressed to the CS-RNTI). After the UL grant is configured for configured grant Type 2, the UE may consider that the UL grant recurs in association with each symbol satisfying: [(SFN * *numberOfSlotsPerFrame * numberOfSymbolsPerSlot*) + (slot number in the frame ** numberOfSymbolsPerSlot*) *+* symbol number in the slot] = [(SFN_{start time} ** numberOfSlotsPerFrame * numberOfSymbolsPerSlot +* slot_{start time} ** numberOfSymbolsPerSlot +* symbol_{start time}) + N ** periodicity*] modulo (1024 ** numberOfSlotsPerFrame * numberOfSymbolsPerSlot*), for all N >= 0, where SFN_{start time}, slot_{start time}, and symbol_{start time} represent an SFN, a slot, and a symbol, respectively, of the first transmission opportunity of the PUSCH after the configured grant is (re-)initialized, and *numberOfSlotsPerFrame and numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* and/or a parameter *harq-ProcID-Offset2* used to derive HARQ process IDs for configured UL grants may be further provided by the BS to the UE. *harq-ProcID-Offset* is an offset of a HARQ process for a configured grant for operation with shared spectrum channel access, and *harq-ProcID-Offset2* is an offset of a HARQ process for a configured grant. In the present disclosure, *cg-RetransmissionTimer* is a duration after (re)transmission based on a configured grant in which the UE should not autonomously perform retransmission based on the HARQ process of the (re)transmission. *cg-RetransmissionTimer* may be provided to the UE by the BS when retransmission on a configured UL grant is configured. For configured grants configured with neither *harq-ProcID-Offset* nor *cg-RetransmissionTimer,* the HARQ process ID associated with the first symbol of UL transmission may be derived from the following equation: HARQ Process ID = *[floor(CURRENT_symbol*/*periodicity*)] modulo *nrofHARQ-Processes.* For configured UL grants with *harq-ProcID-Offset2,* the HARQ process ID associated with the first symbol of UL transmission may be derived from the following equation: HARQ Process ID = [floor(CURRENT_symbol / *periodicity*)] modulo *nrofHARQ-Processes + harq-ProcID-Offset2,* where CURRENT_symbol = (SFN ** numberOfSlotsPerFrame * numberOfSymbolsPerSlot +* slot number in the frame ** numberOfSymbolsPerSlot +* symbol number in the slot), and *numberOfSlotsPerFrame* and *numberOfSymbolsPerSlot* denote the number of consecutive slots per frame and the number of consecutive OFDM symbols per slot, respectively. For configured UL grants with *cg-RetransmissionTimer,* the UE may select a HARQ process ID from among HARQ process IDs available for the configured grant configuration.

On DL, the UE may be configured with semi-persistent scheduling (SPS) per serving cell and per BWP by RRC signaling from the BS. For DL SPS, DL assignment is provided to the UE by the PDCCH and stored or cleared based on L1 signaling indicating SPS activation or deactivation. When SPS is configured, the UE may be provided with the following parameters by the BS through RRC signaling (e.g., SPS configuration) used to configure a semi-persistent transmission:
- *cs-RNTI* corresponding to a CS-RNTI for activation, deactivation, and retransmission;
- *nrofHARQ-Processes* that provides the number of HARQ processes for SPS;
- *periodicity* that provides a periodicity of configured DL assignment for SPS;
- *nlPUCCH-ANthat* provides a HARQ resource for a PUCCH for SPS (the network configures the HARQ resource as format 0 or format 1, and the actual PUCCH resource is configured by *PUCCH-Config* and referred to in *n1PUCCH-AN* by the ID thereof).

Multiple DL SPS configurations may be configured within the BWP of a serving cell. After DL assignment is configured for SPS, the UE may consider sequentially that N-th DL assignment occurs in a slot satisfying: (*numberOfSlotsPerFrame ** SFN + slot number in the frame) = [(*numberOfSlotsPerFrame* * SFN_{start time} + slot_{start time}) + N ** periodicity * numberOfSlotsPerFrame* / 10] modulo (1024 ** numberOfSlotsPerFrame*), where SFN_{start time} and slot_{start time} represent an SFN and a slot, respectively, of first transmission of the PDSCH after configured DL assignment is (re-)initialized, and *numberOfSlotsPerFrame* and *numberOfSymbolsPerSlot* indicate the number of consecutive slots per frame and the number of consecutive OFDM symbols per slot, respectively (refer to Table 1 and Table 2).

In some scenarios, a parameter *harq-ProcID-Offset* used to derive HARQ process IDs for configured DL assignments may be further provided by the BS to the UE. *harq-ProcID-Offset* is an offset of a HARQ process for SPS. For configured DL assignments without *harq-ProcID-Offset,* a HARQ process ID associated with a slot in which DL transmission starts may be determined from the following equation: HARQ Process ID = [floor (CURRENT_slot * 10 / *(numberOfSlotsPerFrame * periodicity*))] modulo *nrofHARQ-Processes,* where CURRENT_slot = [(SFN ** numberOfSlotsPerFrame*) *+* slot number in the frame], and *numberOfSlotsPerFrame* denotes the number of consecutive slots per frame. For configured DL assignments with *harq-ProcID-Offset,* a HARQ process ID associated with a slot in which DL transmission starts may be determined from the following equation: HARQ Process ID = [floor (CURRENT_slot / periodicity)] modulo nrofHARQ-Processes + harq-ProcID-Offset, where CURRENT_slot = [(SFN * numberOfSlotsPerFrame) + slot number in the frame], and *numberOfSlotsPerFrame* denotes the number of consecutive slots per frame.

If the CRC of a corresponding DCI format is scrambled with the CS-RNTI provided by the RRC parameter *cs-RNTI,* and a new data indicator field for an enabled transport block is set to 0, the UE validates, for scheduling activation or scheduling release, a DL SPS assignment PDCCH or a configured UL grant Type 2 PDCCH. Validation of the DCI format is achieved if all fields for the DCI format are set according to Table 5 and Table 6. Table 5 shows an example of special fields for DL SPS and UL grant Type 2 scheduling activation PDCCH validation, and Table 6 shows an example of special fields for DL SPS and UL grant Type 2 scheduling release PDCCH validation.

**Table 5**

| | DCI format 0_0/0_1 | DCI format 1_0 | DCI format 1_1 |
|---|---|---|---|
| HARQ process number | set to all '0's | set to all '0's | set to all '0's |
| Redundancy version | set to '00' | set to '00' | For the enabled transport block: set to '00' |

**Table 6**

| | DCI format 0_0 | DCI format 1_0 |
|---|---|---|
| HARQ process number | set to all '0's | set to all '0's |
| Redundancy version | set to '00' | set to '00' |
| Modulation and coding scheme | set to all '1's | set to all '1's |
| Resource block assignment | set to all '1's | set to all '1's |

Actual DL assignment and UL grant for DL SPS or UL grant Type 2, and a corresponding MCS are provided by resource assignment fields (e.g., a TDRA field providing a TDRA value m, an FDRA field providing frequency resource block assignment, and/or an MCS field) in the DCI format carried by a corresponding DL SPS or UL grant Type 2 scheduling activation PDCCH. If validation is achieved, the UE considers information in the DCI format as valid activation or valid release of DL SPS or configured UL grant Type 2.

In the present disclosure, a PDSCH based on DL SPS may be referred to as an SPS PDSCH, and a PUSCH based on a UL configured grant (CG) may be referred to as a CG PUSCH. A PDSCH dynamically scheduled by DCI carried on a PDCCH may be referred to as a dynamic grant (DG) PDSCH, and a PUSCH dynamically scheduled by DCI carried by on a PDCCH may be referred to as a DG PUSCH.

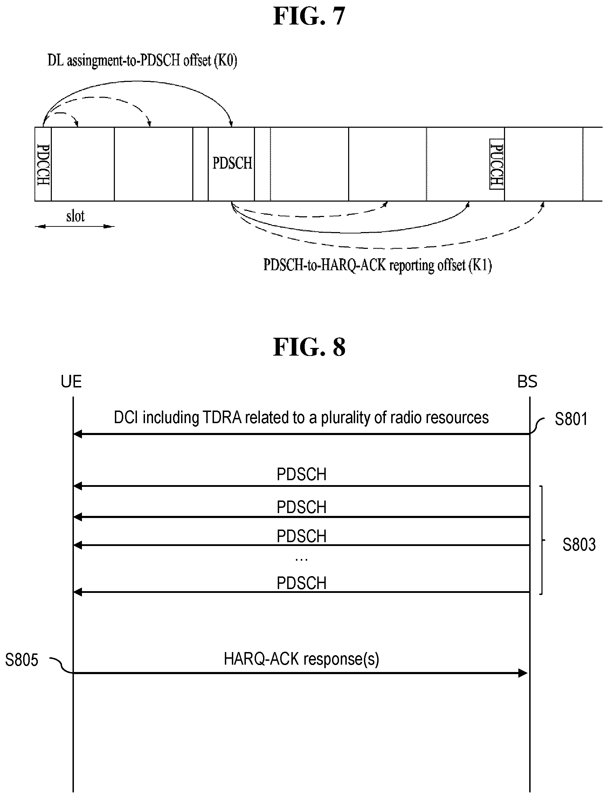

FIG. 7 illustrates a HARQ-ACK transmission/reception procedure.

Referring to FIG. 7, the UE may detect a PDCCH in a slot n. Next, the UE may receive a PDSCH in a slot n+K0 according to scheduling information received through the PDCCH in the slot n and then transmit UCI through a PUCCH in a slot n+K1. In this case, the UCI includes a HARQ-ACK response for the PDSCH.

The DCI (e.g., DCI format 1_0 or DCI format 1_1) carried by the PDCCH for scheduling the PDSCH may include the following information.
- FDRA: FDRA indicates an RB set allocated to the PDSCH.
- TDRA: TDRA indicates a DL assignment-to-PDSCH slot offset K0, the start position (e.g., symbol index S) and length (e.g., the number of symbols, L) of the PDSCH in a slot, and the PDSCH mapping type. PDSCH mapping Type A or PDSCH mapping Type B may be indicated by TDRA. For PDSCH mapping Type A, the DMRS is located in the third symbol (symbol #2) or fourth symbol (symbol #3) in a slot. For PDSCH mapping Type B, the DMRS is allocated in the first symbol allocated for the PDSCH.
- PDSCH-to-HARQ_feedback timing indicator: This indicator indicates K1.

If the PDSCH is configured to transmit a maximum of one TB, a HARQ-ACK response may consist of one bit. If the PDSCH is configured to transmit a maximum of 2 TBs, the HARQ-ACK response may consist of 2 bits when spatial bundling is not configured and one bit when spatial bundling is configured. When a HARQ-ACK transmission timing for a plurality of PDSCHs is designated as slot n+K1, UCI transmitted in slot n+K1 includes a HARQ-ACK response for the plural PDSCHs.

In the present disclosure, a HARQ-ACK payload consisting of HARQ-ACK bit(s) for one or plural PDSCHs may be referred to as a HARQ-ACK codebook. The HARQ-ACK codebook may be categorized as i) a semi-static HARQ-ACK codebook, ii) a dynamic HARQ-ACK codebook and iii) HARQ process based HARQ-ACK codebook, according to a HARQ-ACK payload determination scheme.

In the case of the semi-static HARQ-ACK codebook, parameters related to a HARQ-ACK payload size that the UE is to report are semi-statically determined by a (UE-specific) higher layer (e.g., RRC) signal. The HARQ-ACK payload size of the semi-static HARQ-ACK codebook, e.g., the (maximum) HARQ-ACK payload (size) transmitted through one PUCCH in one slot, may be determined based on the number of HARQ-ACK bits corresponding to a combination (hereinafter, bundling window) of all DL carriers (i.e., DL serving cells) configured for the UE and all DL scheduling slots (or PDSCH transmission slots or PDCCH monitoring slots) for which the HARQ-ACK transmission timing may be indicated. That is, in a semi-static HARQ-ACK codebook scheme, the size of the HARQ-ACK codebook is fixed (to a maximum value) regardless of the number of actually scheduled DL data. For example, DL grant DCI (PDCCH) includes PDSCH-to-HARQ-ACK timing information, and the PDSCH-to-HARQ-ACK timing information may have one (e.g., k) of a plurality of values. For example, when the PDSCH is received in slot #m and the PDSCH-to-HARQ-ACK timing information in the DL grant DCI (PDCCH) for scheduling the PDSCH indicates k, the HARQ-ACK information for the PDSCH may be transmitted in slot #(m+k). As an example, k ∈ { 1, 2, 3, 4, 5, 6, 7, 8}. When the HARQ-ACK information is transmitted in slot #n, the HARQ-ACK information may include possible maximum HARQ-ACK based on the bundling window. That is, HARQ-ACK information of slot #n may include HARQ-ACK corresponding to slot #(n-k). For example, when k ∈ {1, 2, 3, 4, 5, 6, 7, 8}, the HARQ-ACK information of slot #n may include HARQ-ACK corresponding to slot #(n-8) to slot #(n-1) regardless of actual DL data reception (i.e., HARQ-ACK of a maximum number). Here, the HARQ-ACK information may be replaced with a HARQ-ACK codebook or a HARQ-ACK payload. A slot may be understood/replaced as/with a candidate occasion for DL data reception. As described in the example, the bundling window may be determined based on the PDSCH-to-HARQ-ACK timing based on a HARQ-ACK slot, and a PDSCH-to-HARQ-ACK timing set may have predefined values (e.g., {1, 2, 3, 4, 5, 6, 7, 8}) or may be configured by higher layer (RRC) signaling. The semi-static HARQ-ACK codebook is referred to as a Type-1 HARQ-ACK codebook. For the Type-1 HARQ-ACK codebook, the number of bits to be transmitted in a HARQ-ACK report is fixed and may be potentially large. If many cells are configured but only few cells are scheduled, the Type-1 HARQ-ACK codebook may be inefficient.

In the case of the dynamic HARQ-ACK codebook, the HARQ-ACK payload size that the UE is to report may be dynamically changed by the DCI etc. The dynamic HARQ-ACK codebook is referred to as a Type-2 HARQ-ACK codebook. The Type-2 HARQ-ACK codebook may be considered as optimized HARQ-ACK feedback because the UE sends feedback only for scheduled serving cells. However, in poor channel conditions, the UE may erroneously determine the number of scheduled serving cells. To solve this problem, a downlink assignment index (DAI) may be included as a part of DCI. For example, in the dynamic HARQ-ACK codebook scheme, DL scheduling DCI may include a counter-DAI (i.e., c-DAI) and/or a total-DAI (i.e., t-DAI). Here, the DAI indicates a downlink assignment index and is used for the BS to inform the UE of transmitted or scheduled PDSCH(s) for which HARQ-ACK(s) are to be included in one HARQ-ACK transmission. Particularly, the c-DAI is an index indicating order between PDCCHs carrying DL scheduling DCI (hereinafter, DL scheduling PDCCHs), and t-DAI is an index indicating the total number of DL scheduling PDCCHs up to a current slot in which a PDCCH with the t-DAI is present.

In the case of a HARQ-ACK codebook based on HARQ processes, the HARQ-ACK payload is determined based on all HARQ processes of all configured (or activated) serving cells in a PUCCH group. For example, the size of the HARQ-ACK payload to be reported by the UE using the HARQ-ACK codebook based on HARQ processes may be determined based on the number of all configured or activated serving cells in the PUCCH group configured for the UE and the number of HARQ processes for the serving cells. The HARQ-ACK codebook based on HARQ processes is also referred to as a Type-3 HARQ-ACK codebook. The type-3 HARQ-ACK codebook may be applied to one-shot feedback.

Extended reality (XR) is an ultra-immersive technology and service that provides an environment in which the users are capable of communicating and living without restrictions on time and space in a virtual space similar to reality by utilizing virtual reality (VR), augmented reality (AR), mixed reality (MR), holography, etc. XR is one of major services to be introduced in an NR wireless communication system. XR is typically characterized by specific traffic with one or more DL video streams which are closely synchronized with frequent UL pose/control updates. In addition, XR has a high data rate and a stringent packet delay budget (PDB).

A video stream is the most important flow for XR use cases. A video is divided into separate frames before transmission. A data packet representing a video frame may be transmitted wirelessly. An average inter-arrival time of packets is the reciprocal of a frame rate in frames per second. For video streams, if there are a lot of changes in the video on a screen, the communication traffic is high, whereas if there are few change in the video, the traffic is low.

In NR, one or more SPS PDSCHs or CG PUSCHs may be configured for the UE for periodic transmission and reception or a low delay time and PDCCH overhead. A corresponding configured/indicated resource may be repeated in the time domain with a periodicity according to each SPS/CG configuration. For example, first configured/indicated resource allocation may be repeated at a configured periodicity by the SPS/CG configuration, and the UE may perform DL reception/UL transmission on a corresponding resource without a separate PDCCH reception process. Meanwhile, there are various types of data that may be generated in XR. Among the data, it is considered that sensor and location information of the UE and video data, generally reported at a specific periodicity, are transmitted and received on SPS/CG resources. In such data, a traffic arrival time is not constant and jitter may occur for reasons such as a video encoding time, a sensor measurement time, a higher layer operation, or a routing change of a network.

For XR services, dynamic scheduling may also be considered. When latency-sensitive XR services are used, it is necessary to consider a method for ensuring that such transmissions are not canceled by other transmissions. In addition, the UE needs to receive appropriate DL assignments and/or UL grants for the service. In NR, a priority at the PHY layer has been introduced for a plurality of services. Thus, the UE may perform UL transmission or DL reception using only one of overlapping radio resources. Alternatively, the UE may divide overlapping UL transmissions into a plurality of groups and perform UL multiplexing. In this process, lower-priority transmissions may be canceled, and thus a method of preventing the cancellation of XR transmissions need to be considered.

If the BS allocates resources to a location sufficiently far away in time from an expected traffic occurrence time point in consideration of jitter at a data occurrence time point, availability of resources may be guaranteed, but a delay time may occur. Conversely, if an SPS/CG resource with a fixed periodicity is allocated at an expected data occurrence time point, a greater delay time may occur due to a waiting time to the next available resource during occurrence of jitter.

On the other hand, since some data is generated based on events, it is impossible to accurately determine an actual data occurrence time point. However, it is considered to use the SPS/CG resource even for such data in order to reduce a delay time caused by scheduling. In this case, skipping method(s) in which a network allocates a sufficiently large number of resources at a short periodicity in preparation for occurrence of data, and the UE or BS selectively uses some of these resources and does not actually use other resource(s) may be considered. However, in order to use the method of skipping transmission and reception, the UE and BS needs to carefully consider a response signal for determining whether to perform reception and/or transmission between the UE and the BS. If the UE needs to transmit the response signal even for transmission that the UE has not received, the BS should always prepare for resources on which the UE is to transmit the response signal. Considering that the skipping method is based on configuring a sufficiently large number of resources within radio resources, configuring resources so that the UE may transmit the response signal even for transmission that the UE has not received may act as significant UL burden. Considering that these resources may be multiplexed between UEs, the burden of UL resources should be considered more important.

The above matters need to be considered when an XR service or a similar third-party service. For example, to effectively transmit information such as video in which a payload size of various services or traffic dynamically changes, it may be considered to schedule a plurality of radio resources through single DCI (i.e., to schedule a plurality of PDSCH receptions through single DCI or to schedule a plurality of PUSCH transmissions through single DCI) to utilize the plurality of radio resources to effectively alleviate jitter, or to simultaneously schedule different radio resources having various characteristics required for various services.

Hereinbelow, while the implementations of the present disclosure will be described based on the NR system, the implementations of the present disclosure are not limited to the transmission/reception of NR. Additionally, while, in the present disclosure, the implementations of the present disclosure are described using characteristics and structures of the XR service as an example, the implementations of the present disclosure are not limited to support of the XR service. The implementations of the present disclosure may be applied to all wireless communication transmission/reception structures and services even without separate description.

Hereinafter, some implementations of the present disclosure for scheduling a plurality of radio resources into single DCI are described. That is, hereinafter, some implementations of the present disclosure for scheduling a plurality of PDSCH receptions over single DCI or for scheduling a plurality of PUSCH transmissions over single DCI are described.

Hereinafter, some implementations of the present disclosure in which a UE schedules a plurality of radio resources for an XR service from single DCI, transmits or receives user data through the plurality of radio resources scheduled through the corresponding DCI, and transmits a response thereto will be described.

The present disclosure describes implementations for activating/deactivating semi-static configurations. For example, the implementations of the present disclosure may include a method for the BS to allocate PDSCH/PUSCH radio resource(s) to the UE and a method for the UE to perform DL reception or UL transmission on the allocated radio resource(s). Some implementations of the present disclosure may include a method of transmitting a HARQ-ACK PUCCH response to a PDSCH reception result by the UE and a method of receiving retransmission DCI of the BS through a PDCCH after transmitting a PUSCH. In some implementations of the present disclosure, the UE may transmit signals and channels for announcing capabilities thereof and/or service requirements, and the BS may receive the signals and channels.

Some implementations of the present disclosure may be selectively applied in part. Some implementations of the present disclosure may be performed independently without combination with other implementations, or one or more implementations may be combined and performed in an associated form. Some terms, symbols, sequences, etc. used in the present disclosure may be replaced with other terms, symbols, sequences, etc. as long as the principle of implementations of the present disclosure is maintained.

FIG. 8 illustrates a signal transmission/reception flow between a UE and a BS according to some implementations of the present disclosure.

The UE may receive a semi-static configuration, which is needed to schedule a plurality of radio resources, from the BS via RRC signaling. The configured semi-static configuration may include time domain resource allocation (TDRA) indicating a plurality of radio resources, or a periodicity, number or transmission time of radio resources, etc., that may configure a plurality of radio resources. Based on this information, the BS may transmit DCI for scheduling a plurality of radio resources to the UE, and the UE may receive the DCI and be allocated the plurality of radio resources (S801). For example, a UE that receives scheduling DCI indicating a TDRA indicating a plurality of radio resources may be allocated a plurality of radio resources based on a plurality of time-domain resource information provided in the corresponding TDRA and other information provided in the DCI, such as information of frequency domain resource allocation (FDRA) and modulation and coding scheme (MCS). As another example, a UE that is configured with a periodicity, number or transmission time of radio resources may perform repeated transmission or reception for the periodicity, number of times or for the transmission time, through radio resources scheduled with the corresponding DCI only when the DCI includes an indicator indicating that the DCI indicates a plurality of radio resources. The UE may determine transmission parameters to be applied to each of the plurality of radio resources, such as MCS value(s) to be applied, or DMRS configuration(s) by using some implementations of the present disclosure. The UE may transmit a HARQ-ACK response to the PDSCH receptions (S805) when performing a plurality of PDSCH receptions over the plurality of radio resources (S803) by using some implementations of the present disclosure.

Some implementations of the present disclosure described below may be applied independently or in combination of two or more.

Some implementations of the present disclosure may be defined to be applied only when the UE receives relevant configuration information from the BS (or core network), and in this case, the configuration information may be transmitted using a higher layer signal (e.g., system information block (SIB) or RRC signaling), or may be used together with a method in which the UE is indicated to activate/deactivate the configured information via separate signaling (e.g., DCI or MAC control element). It may be regulated that the UE reports information (e.g., capabilities) regarding whether method(s) according to some implementations of the present disclosure is supported, and that the BS (or core network) receives this information.

### <Implementation 1: Multi-slot scheduling with different MCSs>

The BS may indicate or configure a plurality of radio resources to the UE, and the UE may perform PDSCH receptions or PUSCH transmissions on a given plurality of radio resources. The BS may schedule a plurality of radio resources based on a channel state of the UE at a scheduling time, and thus even if appropriate radio resources may be selected at the scheduling time, the channel state of the UE may change when the UE transmits or receives radio resources far from the scheduling time. Therefore, there is a need for scheduling that is more robust to a channel state for a radio resource far from the scheduling time. Considering this, the UE and the BS may perform at least one of the following operations.
> Alt. 1: When a BS indicates or configures a plurality of radio resources to a UE, a plurality of MCS values may be provided in a scheduling message from the BS (e.g., DL assignment or UL grant). For example, scheduling DCI (e.g., DCI format 1_x or DCI format 0_y) may include a plurality of MCS fields. Alternatively, an MCS offset field may be added to a legacy MCS field. The MCS offset field may be a number of bits (e.g., 2 bits) that indicate a second MCS value minus a first MCS value. That is, the MCS value given by a legacy MCS field may be determined as the first MCS value, and a value obtained by adding the MCS value given by the legacy MCS field and a difference given in the offset field may be determined as the second MCS value.
   >> When the corresponding scheduling message schedules N PDSCHs or PUSCHs, the plurality of MCS values, for example, M MCS values, may be applied to each PDSCH/PUSCH as follows.
      >>> Option 1: For each MCS value, the number of radio resources to which the corresponding MCS value is applied may be predefined or configured via higher layer signaling of the BS. The UE and the BS may apply MCS values to a plurality of radio resources given through the scheduling message according to the number of radio resources to which each MCS value is to be applied in order of the given MCS values. For example, when the UE is configured with four radio resources through one scheduling message, and the first MCS value included in the scheduling message is configured to be applied to two radio resources and the second MCS value is configured to be applied to four radio resources, the UE may apply the first MCS value to the first two radio resources and the second MCS value to next two radio resources.
      >>> Option 2: When the scheduling message contains two MCS values, the UE and the BS may apply the first MCS value to the first floor(N/2) radio resource(s) and the second MCS value to the remaining ceil(N/2) radio resource(s).
      >>> Option 3: When the scheduling message contains two MCS values, the UE and the BS may apply the first MCS value to the first X radio resource(s) and the second MCS value to the remaining radio resource(s). Here, X may be an integer value greater than or equal to 1, indicated or configured via L 1 signaling or higher layer signaling of the BS.
      >>> Option 3: When the scheduling message contains two MCS values, the UE and the BS may apply the first MCS value to the radio resource(s) for the first X symbols/slots/milliseconds and the second MCS value to the remaining radio resource(s). Here, X may be a value indicated or configured via L1 signaling or higher layer signaling of the BS.
> Alt. 2: When a BS indicates or configures a plurality of radio resources to a UE, a scheduling message (e.g., DL assignment or UL grant) of the BS may indicate a row with a plurality of start and length indicator values (SLIV) in the TDRA table together with an MCS. The corresponding row may also include MCS adjustment value to be used for respective SLIV. When the UE performs reception or transmission on the plurality of scheduled radio resources, i.e., when performing transmission of a PDSCH or PUSCH corresponding to each SLIV, the UE may determine an MCS to be used for each radio resource transmission by considering an MCS value included in the scheduling message and the MCS adjustment value included in the TDRA information. For example, when the UE is scheduled to have four radio resources with an MCS value of K, and the MCS adjustment values configured for the respective radio resources are 0, -1, -2, and -3, the UE may determine the MCS values to be used for the respective radio resource as K, K-1, K-2, and K-3.
> Alt. 3: When the BS indicates or configures a plurality of radio resources to the UE, the scheduling message of the BS (e.g., DL assignment or UL grant) may include one MCS value and a plurality of radio resources. In this case, the UE may only consider the size of a first radio resource to determine a transport block size (TBS) of the indicated plurality of radio resources. In other words, the UE and the BS may determine the TBS by considering the size of the first radio resource and the given MCS value and use the TBS determined based on the first radio resource in all radio resources. Through this, the UE and the BS may use the same TBS inn all radio resources, and the BS may indirectly control a coding rate of each radio resource by adjusting the size of the radio resource. To dynamically indicate that the UE determines only one TBS for a plurality of radio resources, a 1-bit flag may be included in the scheduling DCI to indicate whether or not to perform the corresponding operation. When the flag is off, the UE may determine a TBS according to the size of each radio resource by applying a given MCS to each radio resource, and when the flag is on, the UE may determine a TBS based on the first radio resource and the given MCS value and apply the TBS to all remaining radio resources.

### <Implementation 2: Enhanced HARQ-ACK feedback for multi-slot scheduling>

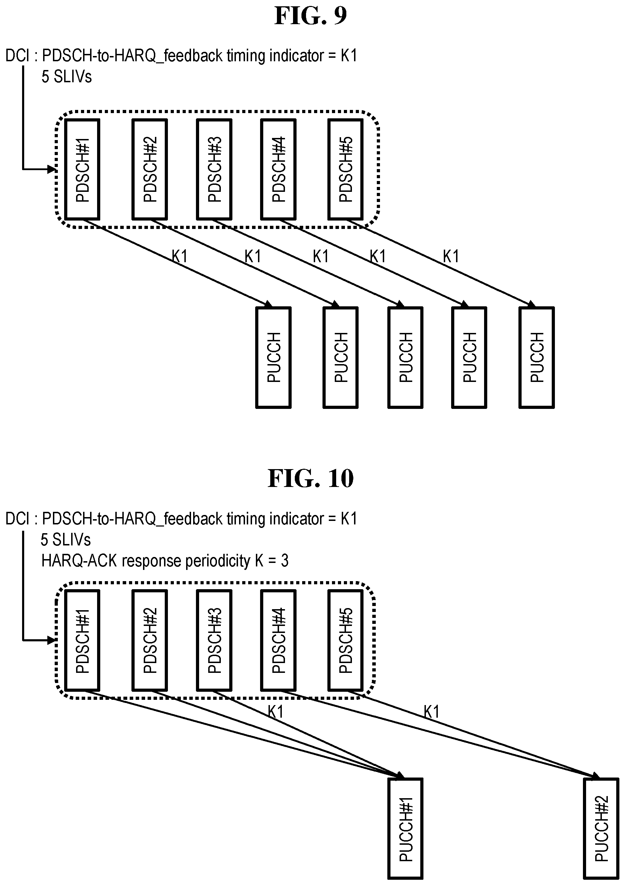

FIG. 9 shows an example of HARQ-ACK feedback for multi-slot scheduling by one scheduling message.

The BS may indicate or configure a plurality of radio resources to the UE, and the UE may transmit PDSCH receptions or PUSCH transmissions in a given plurality of radio resources. The UE that receives a PDSCH may transmit a PUCCH/PUSCH including a HARQ-ACK response for each PDSCH based on a PDSCH-to-HARQ delay (e.g., PDSCH-to-HARQ_feedback timing indicator) and a PUCCH resource indicator (PRI) included in the scheduling message. For example, the UE may transmit a HARQ-ACK response in a PUCCH resource determined by PRI in a slot that is in a UL slot separated by a PDSCH-to-HARQ delay from the received PDSCH, and when there is another PUCCH transmission or PUSCH transmission overlapping with the corresponding PUCCH resource, the UE may transmit a HARQ-ACK response in a PUCCH or PUSCH obtained through UL multiplexing.

In this case, when the scheduling message schedules N PDSCHs or PUSCHs, up to N PUCCH/PUSCH transmissions may occur for HARQ-ACK response transmission. For example, referring to FIG. 9, the DCI for scheduling PDSCHs includes one PDSCH-to-HARQ feedback timing indicator field and one PRI field, and thus the same PDSCH-to-HARQ feedback timing indicator value and the same PRI value are applied to each of the plurality of PDSCHs, and up to N PUCCH/PUSCH transmissions may occur for the up to N PDSCHs, respectively.

FIGS. 10 to 14 illustrate examples of HARQ-ACK feedback according to some implementations of the present disclosure.

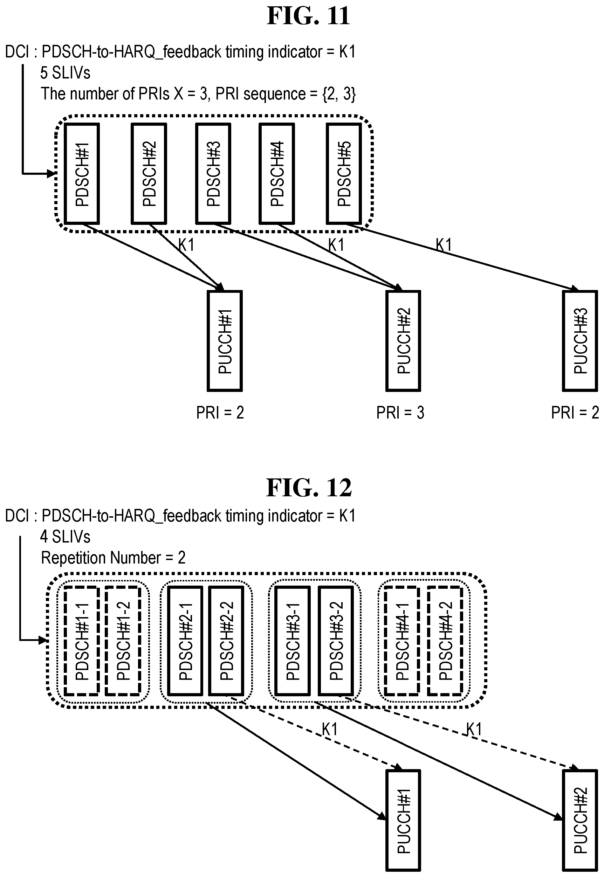

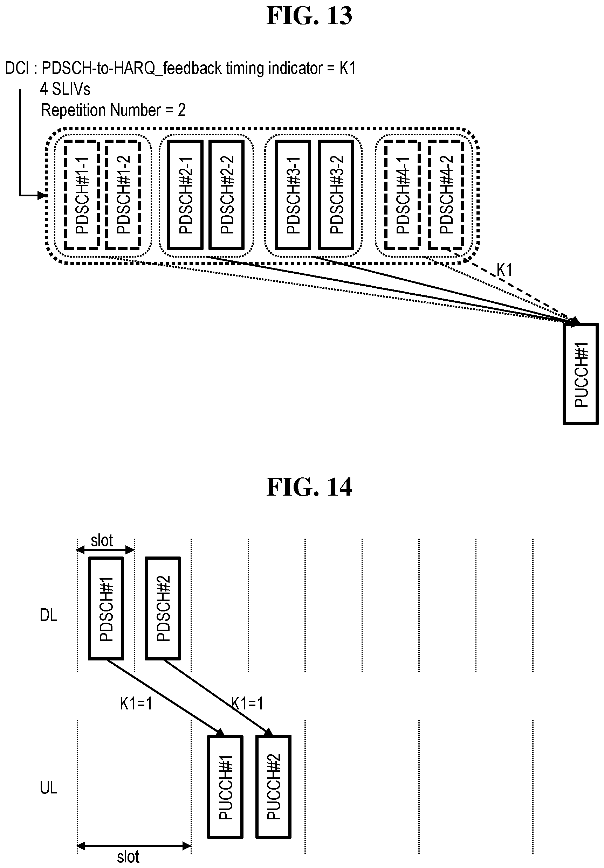

When a scheduling message schedules N PDSCHs/PUSCHs, in some implementations of the present disclosure, the UE and the BS may perform at least one of the following operations to save UL radio resources.
> Alt. 1: When the BS indicates or configures a plurality of radio resources to the UE, the scheduling message of the BS (e.g., DL assignment or UL grant) may indicate a row with a plurality of SLIVs in the TDRA table along with an MCS. For example, the corresponding row may include SLIV to be used for radio resource allocation, SLIV periodicity P, number of SLIVs N, and HARQ-ACK response periodicity. The UE may repeat a given SLIV for every SLIV periodicity P, the number of SLIVs N, based on the scheduling message. Alternatively, the TDRA table may indicate a row with a plurality of SLIV and HARQ-ACK response periodicity. The HARQ-ACK response periodicity K may determine a frequency of transmitting a HARQ-ACK response. When a value of the HARQ-ACK response periodicity K is k, the UE may determine a PUCCH by considering a PDSCH-to-HARQ delay and PRI based on the k-th or last radio resource from among N radio resources, and then transmit a HARQ-ACK response on the corresponding PUCCH, and each HARQ-ACK response include an HARQ-ACK state for each of the k radio resource(s) or (N mod k) radio resource(s) in order. When the HARQ-ACK response periodicity is a certain value (e.g., 0), the UE may transmit the HARQ-ACK response for all radio resources in one PUCCH determined based on the last radio resource (i.e., the last PDSCH occasion). In other words, N PDSCH occasions by one scheduling message may be divided into a plurality of (e.g., X) PDSCH groups, and an HARQ-ACK response for each PDSCH group may be transmitted on one PUCCH determined based on the last PDSCH occasion of the corresponding PDSCH group. When the number of PUCCHs for N PDSCHs scheduled by one scheduling message is X, the number of PDSCHs associated with the last PUCCH may be (k*X - N). Referring to FIG. 10, for example, when DCI for scheduling a plurality of PDSCH receptions includes a PDSCH-to-HARQ_feedback timing indicator value = K₁, and a row indicated by a TDRA value in the DCI includes N = 5 SLIVs, and when the row or the DCI includes a HARQ-ACK response period K = 3, HARQ-ACK information bits for PDSCH#1 to PDSCH#3 may be transmitted on PUCCH#1 in a slot K1 slot(s) after a slot in which PDSCH#3 is present, and HARQ-ACK information bits for PDSCH#4 and PDSCH#5 may be transmitted on PUCCH#2 in a slot K₁ slot(s) after a slot in which PDSCH#5 is present. When each PUCCH resource is difficult to transmit considering the TDD configuration of the BS, for example, when a symbol transmitting a DL symbol or SS/PBCH block overlaps the determined PUCCH resource, the PUCCH transmission may be postponed to an available UL slot or dropped, and when dropped, the k HARQ-ACK response(s) to be included in the corresponding PUCCH transmission may be transmitted together with the PUCCH for next k HARQ-ACK response(s).
> Alt. 2: When the BS indicates or configures a plurality of radio resources to the UE, the scheduling message of the BS (e.g., DL assignment or UL grant) may include the number X of PRIs to be used for this scheduling. A PRI field included in the scheduling message may indicate a PRI sequence of length Y, which is predefined or configured via higher layer signaling of the BS. In this case, the number of PRI information X included in the scheduling message may be used as follows.
   >> When the number of PRIs X = 1, one PUCCH is allocated for all PDSCHs. That is, the UE may transmit the HARQ-ACK response for all radio resources on one PUCCH determined based on the last radio resource from among the N scheduled radio resources. A PUCCH resource may be determined by using a given PRI value or a first value of a PRI sequence.
   >> When the number of PRIs X > 1, the UE may group each ceil(N/X) PDSCH(s) and transmit a HARQ-ACK response for each group. When N/X is not an integer, the last group may include (k*X - N) PDSCH(s). Each HARQ-ACK response may be transmitted on a PUCCH determined based on the last radio resource in the group. A PUCCH resource may be determined by using a given PRI value or an (i mod Y)-th value within a PRI sequence for every i-th PUCCH. For example, referring to FIG. 11, when DCI for scheduling a plurality of PDSCH receptions includes a PDSCH-to-HARQ_feedback timing indicator value = K1, a row indicated by a TDRA value in the DCI includes N = 5 SLIVs, and the row or the DCI includes a PRI sequence {2, 3} having the number of PRIs X = 2 and a length Y = 2, the HARQ-ACK responses for PDSCH#1 and PDSCH#2 may be transmitted on PUCCH#1 within a PUCCH resource determined using a first PRI value within the PRI sequence from among PUCCH resources within a slot after K1 slot(s) from a slot with PDSCH#2, and the HARQ-ACK responses for PDSCH#3 and PDSCH#4 may be transmitted on PUCCH#2 in the PUCCH resource determined using a second PRI value within the PRI sequence from among PUCCH resources within a slot after K1 slot(s) from a slot with PDSCH#4, and the HARQ-ACK response to PDSCH#5 may be transmitted on PUCCH#3 within the PUCCH resource determined using the first PRI value within the PRI sequence from among the PUCCH resources within the slot K1 slot(s) after the slot with PDSCH#5.
> Alt. 3: When a BS indicates (e.g. via DCI format) or configures (e.g. via RRC signaling and/or via activation DCI format) a plurality of radio resources to a UE, these radio resources may be for jitter handling. For example, the UE may receive a PDSCH only on at most one radio resource that is determined to be actually transmitted by the BS by using a method such as blind decoding or DMRS detection, from among a given plurality of radio resources. Alternatively, the N radio resources may all be radio resources used for the same TB transmission.
   >> In this case, the UE may transmit only HARQ-ACK information related to the PDSCH received from at most one radio resource that is determined to be transmitted by the BS. The UE may transmit the HARQ-ACK response for the corresponding PDSCH on a PUCCH determined based on the last radio resource from among the N scheduled radio resources. Alternatively, the UE may determine a PUCCH resource by using a given PRI value or a first value of a PRI sequence based on a PDSCH received from at most one radio resource that is determined to be transmitted by the BS. This may be used especially when using type-2 codebook (i.e. type-2 HARQ-ACK codebook).
   >> Alternatively, the UE may respond with a HARQ-ACK state for the PDSCH received from at most one radio resource that is determined to be transmitted by the BS, and transmit a NACK response for all radio resources except the radio resource from which the PDSCH is received from among the N radio resources. This may be used especially when using type-1 codebook (i.e. type-2 HARQ-ACK codebook).
> Alt. 4: When a BS indicates or configures a plurality of radio resources to a UE, the UE may receive a PDSCH only on a radio resource determined to be actually transmitted by the BS by using a method such as blind decoding (e.g., determining that there is PDSCH transmission when the result of decoding the PDSCH is ACK and considering that there is no PDSCH transmission when the result is NACK) or DMRS detection (e.g., through energy level detection), from among the plurality of given radio resources. This may allow the BS to be more aggressive in scheduling.
   >> In this case, the UE may transmit only HARQ-ACK information related to the PDSCH received from a radio resource that is determined to be transmitted by the BS. The UE may transmit the HARQ-ACK response for the corresponding PDSCH on one PUCCH determined based on the last radio resource from among the N scheduled radio resources. A PUCCH resource may be determined by using a given PRI value or a first value of a PRI sequence. This may be especially useful when using type-2 codebook. Conventionally, the number of bits in a HARQ-ACK payload is proportional to the number of PDSCHs scheduled by the corresponding DCI, but according to this method, for example, when the UE determines that only two PDSCHs are transmitted, a part of the HARQ-ACK payload for the DCI in the HARQ-ACK codebook only includes HARQ-ACK bits corresponding to the two PDSCHs.
   >> Alternatively, the UE may respond with a HARQ-ACK state for the PDSCH received from a radio resource that is determined to be transmitted by the BS, and transmit a NACK response for all radio resource(s) except the radio resource from which the PDSCH is received from among the N radio resources. This may be especially useful when using Type-1 codebook. When it is determined that there is no PDSCH transmission on all N radio resources scheduled by one DCI or when it is determined as NACK, the UE may omit HARQ-ACK transmission.
> Alt. 5: When a BS indicates or configures a plurality of radio resources to a UE, it may be considered that these radio resources are repeated. For example, a scheduling message may indicate a row in the TDRA table containing a plurality of SLIVs and a number of repeated transmissions related to each SLIV. Each repeated transmission of SLIV may be used to transmit one transport block (TB). Each SLIV may be repeated in units of symbols as a radio resource with the same symbol length back-to-back for a given number of repetitions, or the corresponding SLIV may be repeated in units of slots for a given number of repetitions. The UE may receive a PDSCH only on a radio resource that is determined to be actually transmitted by the BS by using a method such as blind decoding or DMRS detection, from among a given plurality of radio resources.
   >> The UE may transmit a HARQ-ACK response only for the PDSCH received from a radio resource that is determined to be transmitted by the BS. The UE may transmit a HARQ-ACK response on a PUCCH determined based on the last repeated transmission from among the repeated transmissions based on the corresponding radio resources. A PUCCH resource may be determined by using a given PRI value or a first value of a PRI sequence. For example, referring to FIG. 12, when DCI for scheduling a plurality of PDSCH receptions includes a PDSCH-to-HARQ_feedback timing indicator value = K1, a row indicated by a TDRA value in the DCI includes N = 4 SLIVs, the number of repeated transmissions related to each SLIV = 2, and the UE receives a second TB and a third TB from among four transport blocks (TBs) based on the four SLIVs, a HARQ-ACK response for PDSCH#2-1 and PDSCH#2-2 for repetitions of the second TB may be transmitted on PUCCH#1 within a PUCCH resource determined using a given PRI value or a first value of a PRI sequence from among PUCCH resources within a slot after K1 slot(s) from a slot with PDSCH#2-2, and an HARQ-ACK response for PDSCH#3-1 and PDSCH#3-2 for repetitions of the third TB may be transmitted on PUCCH#2 within the PUCCH resource determined using the given PRI value or the first value of the PRI sequence from among the PUCCH resources within the slot, K1 slot(s) after the slot with PDSCH#3-2.
   >> Alternatively, the UE may transmit a HARQ-ACK response for a PDSCH received on a PUCCH determined based on the last repeated transmission of the last radio resource from among a plurality of radio resources, or a HARQ-ACK response for all scheduled PDSCHs. A PUCCH resource may be determined by using a given PRI value or a first value of a PRI sequence. For example, referring to FIG. 13, when DCI for scheduling a plurality of PDSCH receptions includes a PDSCH-to-HARQ_feedback timing indicator value = K1, a row indicated by a TDRA value in the DCI includes N = 4 SLIVs, the number of repeated transmissions related to each SLIV = 2, and the UE receives a second TB and a third TB from among four TBs based on the four SLIVs, the UE may transmit an HARQ-ACK response for the second and third TBs from among the scheduled four TBs or HARQ-ACK responses for all of the four scheduled TBs on PUCCH#1 within a PUCCH resource determined using a given PRI value or a first value of a PRI sequence from among the PUCCH resources within a slot K1 slot(s) after a slot having PDSCH#4-2, which is the last transmission based on the four SLIVs.

### <Implementation 2-1: PRI determination of enhanced HARQ-ACK feedback>

When the scheduling message of the BS schedules N PDSCHs in the above method(s), the UE may transmit HARQ-ACK responses through a plurality of PUCCH transmissions for a plurality of received/scheduled PDSCHs, and may use different PRI values to determine each PUCCH resource. In this case, when two PUCCH transmissions using different PRIs overlap in time, for example, when the determined PUCCH resources are located in the same UL slot or share the same symbol, as illustrated in FIG. 14, the UE may multiplex the information contained in the two PUCCHs into one PUCCH and transmit the information. Conventionally, when HARQ-ACK PUCCHs overlap each other in time, the UE may determine the PUCCH resource to be used for multiplexing based on a PRI indicated by the most recently received scheduling DCI, but when one DCI determines a plurality of radio resources, it may be impossible to determine a PRI based on a time point of DCI reception, because all PDSCHs related to each PUCCH are scheduled by the same DCI. Therefore, when UL multiplexing of two HARQ-ACK PUCCHs scheduled by DCI that schedules a plurality of radio resources is required, the UE and the BS may determine a PRI as follows to determine one PUCCH to be used for multiplexing of the two PUCCHs.
> The PRI value given for the PDSCH corresponding to the earliest or latest SLIV in the scheduled TDRA information is used for the PDSCHs related to the two PUCCH transmissions.
> The PRI value of the PUCCH transmission that starts earlier than the two PUCCHs is used. This may reduce cases of unnecessary changes of PUCCH resources.
> From among the two PUCCHs, the PRI value of the PUCCH transmission with a later end time of the related PDSCH is used. This may reduce cases of unnecessary changes of PUCCH resources.
> The PRI value may be determined via a separate RRC parameter that is configured to be used when two PUCCHs overlap in time.
   » The UE may always expect the same PRI value to be used when two PUCCHs overlap. In other words, when two PUCCHs overlap, the BS may always schedule the two PUCCHs to be determined through the same PRI.

The UE may multiplex and transmit UCI and HARQ-ACK codebooks included in two PUCCHs on the PUCCH resource determined through the PRI selected as above.

### <Implementation 2-2: DAI determination of enhanced HARQ-ACK feedback>

When the scheduling message of the BS schedules N PDSCHs in the above method(s), the UE may transmit HARQ-ACK responses through a plurality of PUCCH transmissions for a plurality of received/scheduled PDSCHs. When the UE uses a type-2 HARQ-ACK codebook, a DL assignment index (DAI) may be considered to be given for each PDSCH or for each PUCCH. For example, one of the following may be considered.
> Option 1: DAI may be given for each PDSCH/TB/SLIV. The UE may configure a type-2 HARQ-ACK codebook by mapping HARQ-ACK responses for respective PDSCHs received by the UE to different DAI values. To configure DAI for each transmission, the BS may indicate one DAI in a scheduling message, and the corresponding DAI value is applied to the first radio resource included in the scheduling message, and a DAI value added by i from the corresponding DAI value may be mapped to the i-th PDSCH/TB/SLIV
> Option 1: DAI may be given for each PUCCH. The UE may configure a type-2 HARQ-ACK codebook by mapping HARQ-ACK responses for each PUCCH transmitted by the UE to a different DAI value. To configure DAI for each transmission, the BS may indicate one DAI in the scheduling message, and the corresponding DAI value may be used identically for each PUCCH. Alternatively, when configuring a type-2 HARQ-ACK codebook to this end, separate DAI counting for multi-slot scheduling may be performed.

### <Implementation 3: SPS/CG with multiple occasion in period>

As described above, the UE may receive a semi-static configuration, which is needed to schedule a plurality of radio resources, from the BS through RRC signaling. The configured semi-static configuration may include a TDRA indicating a plurality of radio resources, or a periodicity of radio resource, a number or transmission time of radio resources, etc., that may configure a plurality of radio resources. Based on this information, the BS may transmit DCI for scheduling a plurality of radio resources to the UE, and the UE may receive the DCI and be allocated the plurality of radio resources. For example, when the TDRA information that may be indicated is configured in a table format, it may be considered that a TDRA table in which one row has a plurality of SLIVs is configured to the UE and one row index is indicated through DCI, or one row has one SLIV and a plurality of row indices are indicated to the UE.

As another example, when the configured semi-static configuration includes a periodicity of radio resource, a number of radio resources, or a transmission time, etc., the UE that receives the configuration may, when receiving DCI related to the semi-static configuration from among the DCIs transmitted by the BS, repeatedly transmit or receive a radio resource, which is scheduled by the DCI, with the periodicity, as many times as the number of radio resources or for the transmission time.

When the UE receives DCI for scheduling a plurality of radio resources transmitted by the BS through the method described above or another method, and performs a plurality of UL transmissions and DL receptions for a certain period of time through one DCI by receiving the corresponding DCI, it may be considered that, for an XR service having periodic traffic characteristics, one SPS/CG configuration is allocated a plurality of radio resources within a period through the method or a similar method, and different transport blocks are transmitted and received on each radio resource.

As one method for this, the BS may activate SPS/CG through scheduling DCI for the plurality of radio resources, or in case of a radio resources that may be activated without separate DCI, such as type 1 CG, the BS may allocate a plurality of parameters indicating a radio resource of a time domain in (RRC configuration) *rrc-ConfiguredUplinkGrant* or configure one row to use a TDRA table with a plurality of SLIVs, and configure the RRC parameter indicating a radio resource in (RRC configuration) *frc-ConfiguredUplinkGrant* to represent one row in the corresponding table.

Alternatively, as another example, a semi-static configuration for SPS reception or CG transmission may include a periodicity of radio resource, a number or transmission time of radio resources, etc., and the UE configured with the same may, when receiving DCI that activates the corresponding semi-static configuration, transmit or receive the radio resource scheduled with scheduling information included in the corresponding DCI or, in the case of radio resources that may be activated without separate DCI such as type 1 CG, with scheduling information included in *frc-ConfiguredUplinkGrant,* repeatedly with the periodicity as many times as the number of radio resources or for the transmission time. If the periodicity is not configured, the periodicity may be 1 slot, and when the transmission time is not configured, the transmission time may be limited to one period of SPS/CG. That is, when the number is greater than the periodicity, the radio resource may be allocated repeatedly only within the period. Alternatively, the BS may always configure the number to be less than a slot length of the periodicity, and the UE may not expect the number to be configured to be less than the slot length of the periodicity.

### <Implementation 3-1: Handling multiple SLIV information>

When using implementation 3, AR/VR experience through image information transmission may be considered as one of XR services with periodic traffic characteristics. For the image information, transmission of information at around 60 frames per second is currently considered, taking into account motion sickness of a user, bandwidth, and image quality. In the case of an image, the size of information may be different for each frame, and thus it may be considered that a plurality of radio resources are used for one frame, and it is necessary to consider radio resource allocation in which radio resource groups for respective frames are spaced at intervals of 1/60 sec = approximately 16.67 ms.

In the current NR system, values similar to 16.67 ms from among periods of supported radio resource include 16 slots (16 ms for 15 kHz SCS) or 32 slots (16 ms for 30 kHz), but when the system supports traffic with an interval of approximately 16.67 ms with the periodicity, the period of radio resources and the periodicity of the traffic may be misaligned, causing a large delay time at a specific point in time. To resolve this problem, a plurality of radio resources may be allocated in SPS/CGs having a periodicity several times longer than the traffic periodicity, and thus a time interval between radio resources or radio resource groups within one periodicity may be 16.67 ms on average. For example, in an SPS/CG radio resource with a periodicity of 50 slots, radio resource allocation may be considered in which the starting points of each radio resource or radio resource group are spaced apart by 16 ms, 17 ms, and 17 ms (from a starting point of the next period), respectively. To this end, at least one of the following may be considered.
> Method 1: To configure a periodicity several times longer than a periodicity of traffic, multiples of 50 * 14 symbols, such as 50 slots, 100 slots, or 150 slots, may be added as a periodicity of radio resource supported by SPS/CG.
> Method 2: At least one of the following may be considered to ensure that each radio resource has sufficient spacing within a period several times longer than the period of the traffic.
   >> Method 2-1: When one TDRA row indicates a plurality of SLIVs, different slot offsets may be indicated for each SLIV or SLIV group.
      >>> The slot offset may mean slot offset K0 or slot offset K2 described in sections 5.1.2.1 and 6.1.2.1 of 3GPP TS 38.214. This refers to an interval between a slot in which the DCI that schedules the corresponding radio resource is received and a slot in which the corresponding radio resource is to be located.
      >>> In other words, not only a plurality of SLIVs may be configured for a single TDRA row, but also a plurality of slot offsets for each SLIV may be configured.
      >>> Alternatively, when a SLIV group is configured, a list including a plurality of SLIV groups is configured in one TDRA row, and a plurality of SLIVs and one slot offset may be configured for each SLIV group.
      >>> In this case, a value range of one slot offset that is larger than the legacy 32 may be used such that radio resources may be freely allocated in a long periodicity exceeding 50 slots. For example, a value of length 64 or 128 may be used. Different ranges may be applied for each SCS used by the UE.
      >>> Alternatively, it may be considered to change a method of applying a slot offset such that a radio resource may be freely allocated over a long periodicity exceeding 50 slots. For example, when a conventional slot offset means an interval between a slot in which DCI is received and a slot in which a radio resource is located, in the case of SPS/CG having a plurality of radio resources within a period, or in an SPS/CG radio resource in which an indicator indicating another method of applying a slot offset is configured, a slot offset may mean a symbol or slot interval between a last symbol of a previous radio resource/radio resource group or a slot in which a previous radio resource/radio resource group is located and a radio resource related to the corresponding slot offset. For example, when respective slot offsets of (K_{2,1}, K_{2,2}, ..., K_{2,N} ) are configured for a plurality of radio resources (R₁, R₂, ..., R_{N}), a first radio resource in time may be scheduled in a slot that is K_{2,1} away from a slot in which the DCI is received by applying a slot offset K_{2,1} based on a reception time of the DCI, a second radio resource may be scheduled in a slot that is K_{2,2} away from a slot in which the first radio resource is scheduled (or the last repeated transmission or the last symbol of the first radio resource), and the N-th radio resource may be scheduled in a slot that is K_{2,N} away from a slot in which the (N-1)-th radio resource is scheduled (or the last repeated transmission or the last symbol of the N-1th radio resource).

### <Implementation 3-2: Handling multiple SLIV information for type-1 CG>

To use implementation 3, when configuring a type-1 CG, it may be considered to define a rule that allows selecting a TDRA table, in which a plurality of SLIVs are included in a single row, as a TDRA table used for the type-1 CG, or to configure an RRC parameter to explicitly select a TDRA table used for the type-1 CG. For example, at least one of the following may be considered.
> Method 1: An RRC parameter may be introduced indicating a TDRA table to be used by a Type 1 CG. For example, an RRC parameter may be configured to indicate a TDRA table to be used in type-1 CG from among a TDRA table used in DCI format 0_1, a TDRA table used in DCI format 0_2, and/or predefined TDRA tables used in scheduling via DCI format 0_0. The corresponding RRC parameter may be applied only when a plurality of TDRA tables are configured for the UE, with a plurality of SLIVs included in a single row, or for a plurality of DCI formats.
> Method 2: A TDRA table including a plurality of SLIVs in a single row may be preferred. Alternatively, an RRC parameter may be configured to give priority to this table. For example, when a TDRA table in which a plurality of SLIVs are included in one row is configured for DCI format 0_1 and a TDRA table in which one row has one SLIV is configured for DCI format 0_2, an RRC parameter may be configured to use the TDRA table configured for DCI format 0_1 or cause the TDRA table configured for DCI 0_1 to be used, and when a TDRA table in which a plurality of SLIVs are provided in one row is configured for DCI format 0_2 and a TDRA table in which one row has one SLIV is configured for DCI format 0_1, the RRC parameter may be configured to use the TDRA table configured for DCI format 0_2 or cause the TDRA table configured for DCI 0_2 to be used.
> Method 3: A separate TDRA table may be configured for type-1 CG. The corresponding table may be configured for each BWP or for each SPS/CG.
> Method 4: To schedule time domain radio resources of type-1 CG, a plurality of SLIVs and slot offsets may be configured directly without a TDRA table.

When each slot offset is configured for a plurality of radio resources as in Implementation 3-1, additional consideration is required for Type-1 CG. For type-1 CG, there is no separate DCI reception point in time, a slot offset is disregarded in a process of applying SLIV to determine radio resources. Therefore, when scheduling type-1 CG without any additional consideration for this, each radio resource may be mapped to a first slot in a period of type-1 CG. To resolve these problems, radio resources of type-1 CG may be allocated by considering the following method(s).
> Method 1: A slot offset configured for type-1 CG is disregarded and a given radio resource may be scheduled in consecutive slots. For example, when three radio resources are given, a first radio resource may be allocated to a first slot in the period as before, a second radio resource may be allocated to a next slot, that is, the second slot in the period, and a third radio resource may be allocated to the third slot in the period.
> Method 2: Slot offset may be applied only when a plurality of SLIVs are indicated for a single TDRA row. That is, even when using type-1 CG, radio resources may be allocated based on a slot offset K2 indicated with SLIV. For example, when a TDRA row including two radio resources R₁ and R₂ is configured for type-1 CG and slot offsets K_{2,1} and K_{2,2} are configured for each radio resource, the UE may determine a slot in which a periodicity of type-1 CG starts based on the configured parameters *timeDomainOffset and timeReferenceSFN,* and additionally apply slot offsets K_{2,1} and K_{2,2} to the corresponding slot to determine the locations of the radio resources.
> Method 3: Slot offset may be applied only to radio resources after the first radio resource. That is, even when using type-1 CG, radio resources may be allocated based on a slot offset K2 indicated with SLIV starting from a second radio resource. For example, when a TDRA row including three radio resources R₁, R₂, and R₃ is configured for type-1 CG and slot offsets K_{2,1}, K_{2,2}, and K_{2,3} are configured for respective radio resources, the UE determines a slot in which a periodicity of type-1 CG starts based on the configured parameters *timeDomainOffset and timeReferenceSFN,* disregards a slot offset K_{2,1} given for the corresponding slot, allocates a first radio resource, and then applies the slot offsets K_{2,2} and K_{2,3} for the second and third radio resources based on the slot to which the first radio resource is allocated. That is, the second and third radio resources are allocated to slots located K_{2,2} and K_{2,3} away from the slot to which the first radio resource is allocated, respectively.
   >> Alternatively, as another example, the UE determines a slot in which a periodicity of the type-1 CG starts based on the configured parameters *timeDomainOffset and timeReferenceSFN,* disregards the slot offset K_{2,1} given for the corresponding slot, allocates the first radio resource, then applies the slot offset K_{2,2} based on the slot to which the first radio resource is allocated for the second radio resource, and applies the slot offset K_{2,3} for the third radio resource based on the slot to which the second radio resource is allocated. That is, the second radio resource is allocated to a slot that is K_{2,2} away from the slot to which the first radio resource is allocated, and the third radio resource is allocated to a slot that is K_{2,3} away from the second radio resource.
> Method 4: A slot offset reduced by a slot offset of a first radio resource may be applied only to a radio resource after a first radio resource. For example, when a TDRA row including three radio resources R₁, R₂, and R₃ is configured for type-1 CG and slot offsets K_{2,1}, K_{2,2}, and K_{2,3} are configured for respective radio resources, the UE determines a slot in which a periodicity of type-1 CG starts based on the configured parameters timeDomainOffset and timeReferenceSFN, disregards a slot offset K_{2,1} given for the corresponding slot, allocates a first radio resource, and then applies the slot offsets K_{2,2} - K_{2,1} and K_{2,3} - K_{2,1} for the second and third radio resource based on the slot to which the first radio resource is allocated. That is, the second and third radio resources are allocated to slots located K_{2,2} - K_{2,1} and K_{2,3} - K_{2,1} away from the slot to which the first radio resource is allocated, respectively. This allows the same radio resource to be allocated to a Type-1 CG as when a Type-2 CG is configured with the corresponding TDRA information.

### <Implementation 3-3: Sub-periodicity for multiple SPS/CG occasions in period>

For an SPS/CG configuration having a plurality of radio resources per periodicity P, one small periodicity p may be additionally configured for an SPS/CG configuration having one radio resource and one periodicity P. The UE may repeat the configured radio resource for each small periodicity p in each periodicity of SPS/CG until end of the corresponding periodicity (i.e., until a next periodicity is reached).

A combination of {large periodicity P, small periodicity p, one radio resource, number of radio resources N within periodicity P} may be configured, and accordingly, the radio resource may be configured one for each small periodicity p within each periodicity P such that a total of N radio resources may be configured (within the periodicity P).

In this case, the small periodicity p may be configured to be an integer multiple of a slot length. In such cases, an additional symbol or slot offset may be configured to be applied to each repeated radio resource within a period, separate from the configured radio resource. The UE may shift a location in time of the repeated radio resource by applying a related symbol or slot offset when the radio resource is repeated every p within a period. In order for configuring an additional symbol or slot offset, a pattern of the symbol or slot offset may be configured. When a length of the pattern is less than a length of a radio resource within a period, the pattern may be repeated within the period. Alternatively, the pattern may be applied sequentially and cyclically for each configured radio resource starting from SFN0.

In this case, the small periodicity p may be configured by a symbol unit other than 2-symbol or 7-symbol, configured to be an integer multiple of one slot length, configured to be a product of a slot length and a rational number with two integers as numerator and denominator, or configured to be a product of one slot length and a rational number that is not a predefined integer. In this case, a starting point of an n-th radio resource in a period may be located at a distance of floor((n-1)*p) symbols or ceil((n-1)*p) symbols from a starting point of the first radio resource, or may be located at a distance of floor((n-1)*p / numberOfSymbolsPerSlot) slots or ceil((n-1)*p / numberOfSymbolsPerSlot) slots from the starting point of the first radio resource.

### <Implementation 3-4: How to apply repetition factor for multiple SPS/CG occasions in a period>

When a plurality of radio resources are configured in one period of one SPS/CG configuration, the use of repeated transmission may be considered to ensure transmission reliability. In this case, the corresponding repeated transmission may be performed for each of the configured plurality of radio resources. To this end, the following may be additionally considered.
> For each radio resource, a repetition factor, i.e. the number of repetitions, may be configured.
> For a method of repeating each radio resource, in the case of a PUSCH, repetition type A in which radio resources are repeated in units of slots, and repetition type B in which radio resources are repeated in units of symbols may be used as described in S6.1.2.1 of TS 38.214.
   >> In the case of SPS, it may be repeated in slot units.
   >> In the case of CG, the method may comply with a method configured in the CG configuration.
   >> Alternatively, the method by which each radio resource is repeated may be configured differently for each radio resource.

### <Implementation 4: How to select TDRA table for multiple TO scheduling>

As described in this specification, the BS may separately configure a TDRA table containing a plurality of radio resource scheduling information to schedule a plurality of transmission opportunities (TOs) (i.e., transmission occasions (TOs)) in one period, or may implement a plurality of TOs by repeating a single radio resource scheduling information given in the TDRA table multiple times. In this case, it may be considered that the configured TDRA table may be used for other purposes, and that similar forms of TDRA tables may be configured for other purposes. In this case, it is necessary to consider a condition under which the configured TDRA table is used and a method of retrieving only the necessary information from the table configured for other purposes. First, the conditions for scheduling a plurality of TOs may be determined by considering the following.
> Method A-1: A 1-bit enabler for determining a plurality of TOs may be indicated or configured via L1 signaling of the BS or higher layer signaling. A UE indicated or configured with the enabler may configure a plurality of radio resources within a period by referring to a TDRA table that may include a plurality of pieces of radio resource scheduling information as described in this specification, or may obtain a single radio resource scheduling information from a TDRA table selected by a predefined method and use the obtained information repeatedly for a configured number of times. Other methods of the present implementation (e.g., the TDRA table selection method of Implementation 3 or Implementation 3-2) may be considered to obtain one radio resource scheduling information from the selected TDRA table.
   >> Alternatively, the configuration of any other RRC parameter may determine whether a plurality of radio resources are configured.
> Method A-2: The number of repetitions of radio resources within a slot for repeating a given TO and/or the number of slots containing radio resources may be configured for a UE, and the UE, which receives these RRC parameters configured in the CG configuration, may obtain one radio resource scheduling information from a TDRA table selected by a predefined method to determine a CG PUSCH TO in the corresponding CG configuration and use the obtained information repeatedly for the configured number of times. Other methods of the present implementation (e.g., the TDRA table selection method of Implementation 3 or Implementation 3-2) may be considered to obtain one radio resource scheduling information from the selected TDRA table.
> Method A-3: To configure a CG PUSCH for a UE, when a row index of a TDRA table indicated through activation DCI or configured through an RRC parameter includes a plurality of radio resources, the UE may assume a plurality of TOs within a period to determine a CG PUSCH TO of the corresponding CG configuration and use each radio resource information included in a row of a given TDRA table within the period. That is, the UE may determine whether a plurality of radio resources are applied based on the number of time domain resource allocations (TDRAs) given for CG configuration.
> Method A-4: When a separate TDRA table in a CG configuration may be configured, and one row of the configured TDRA table includes a plurality of radio resources, or an information element (IE) that may include a plurality of radio resources is configured, the UE may use each radio resource information included in the row of the given TDRA table within a period assuming that a plurality of TOs may be configured within the period to determine the CG PUSCH TO of the corresponding CG configuration. That is, the UE may determine whether a plurality of radio resources are applied based on the form of a TDRA table given separately for a CG configuration.
> Method A-5: When a separate TDRA table may be configured for the UE according to a DCI format, and at least one row of the configured TDRA table includes a plurality of radio resources, or an IE that may include a plurality of radio resources is configured, the UE may use each radio resource information included in the row of the given TDRA table within a period assuming that a plurality of TOs may be configured within the period to determine the CG PUSCH TO of the corresponding CG configuration. That is, the UE may determine whether a plurality of radio resources are applied based on the form of a TDRA table given separately for a CG configuration.
   >> In the case of type-1 CG, when the TDRA table configured for DCI format 0_1 includes information regarding a plurality of resource allocations in one row, it may be determined that this is a CG configuration that may configure a plurality of TOs.
   >> In the case of type-1 CG, when a TDRA table configured for a DCI format configured with PUSCH repetition transmission type A includes information about a plurality of resource allocations in one row, it may be determined that the CG configuration is capable of configuring a plurality of TOs.

When the UE determines a CG PUSCH TO through a CG configuration and configures a plurality of TOs within a period, i.e., when it is assumed that the corresponding CG configuration may configure a plurality of TOs within the period through the methods A-1/A-2/A-3/A-4/A-5, or when a plurality of TOs are assumed through other methods, the following method may be used to determine a TDRA table to be used in the CG PUSCH configuration and/or activation DCI and/or release DCI and/or retransmission DCI (i.e., DCI for scheduling retransmission).
> Method B1: A separate TDRA table may be configured for each CG configuration. For a CG configuration in which a TDRA table is not configured, the TDRA table may be determined based on the existing method (e.g., S6.1.2.3 and 6.1.2.1.1 of 3GPP TS 38.214 Rel-16), and for a CG configuration in which the TDRA table is configured, the corresponding TDRA table may be used for a CG PUSCH configuration and/or activation DCI and/or release DCI. The UE may refer to a CG configuration index and the CG configuration index included in an HARQ process ID field (i.e., HARQ process number field) in the activate/deactivate DCI to distinguish the TDRA table that may be used for each CG configuration.
> Method B2: A single TDRA table that may be shared by more than one CG configuration may be configured. The corresponding TDRA table may be applied only for a CG configuration by which a plurality of radio resources may be configured, used only for a CG configuration, used only for a UL grant scheduled by a type-1 CG configuration and a specific DCI and an activation DCI, or used only for a CG configuration including a specific RRC parameter and a DG PUSCH. For other CG configurations and DG PUSCH scheduling, for which the corresponding TDRA table is not used, the TDRA table may be determined based on the existing method (e.g., S6.1.2.3 and 6.1.2.1.1 of 3GPP TS 38.214 Rel-16), and when the corresponding TDRA table is used, the corresponding TDRA table may be used for a CG PUSCH configuration and/or activation DCI and/or release DCI and/or retransmission DCI.
> Method B3: The UE may use a DCI format configured with a specific repetition transmission type and/or a TDRA table used in the corresponding DCI format, for a CG configuration that supports a plurality of TOs within a period. For example, when a single radio resource information is used repeatedly for a given number of times, the UE may use the TDRA table, which is used for the DCI format configured with PUSCH repetition type A described in 3GPP TS 38.214 or DCI format 0_0, for the corresponding CG configuration and/or the activation DCI and/or the release DCI and/or the retransmission DCI. Alternatively, the UE may be expected to generate, transmit and receive activate DCI and/or release DCI and/or retransmit DCI only via a DCI format configured with repetition transmission type A or DCI format 0_0. When a plurality of DCI formats configured with repetition transmission type A are configured, the UE may determine a DCI format to be used to select a TDRA table in the order of DCI formats 0_0, 0_1, and 0_2, or select the DCI format in the reverse order.
> This TDRA table selection method may be limited to CG type-1 or to activation/deactivation DCI of CG type-2. That is, the UE may determine a TDRA table to be used for determining a CG type-1 resource and CG type-2 activation DCI and/or release DCI through the method, and for retransmission on a CG PUSCH, the TDRA table to be used may be determined based on a DCI format and a search space in which DCI is received, as in the conventional manner.

When the UE determines CG PUSCH TO(s) through a certain CG configuration, especially when a plurality of TOs are determined within a period by repeating one radio resource information a given number of times, the UE may consider at least one of the following methods to obtain one radio resource information to be repeated. Alternatively, when one radio resource information is required for retransmission of a certain CG PUSCH, or when CG PUSCH retransmission via a plurality of radio resources is not supported, at least one of the following methods may be considered to obtain one radio resource information.
> Method C1: The UE may expect that a row of a TDRA table containing only one radio resource information is indicated or configured as a radio resource of the corresponding CG configuration.
> Method C2: When a row of a TDRA table indicated or configured with a radio resource of the corresponding CG configuration includes information about a plurality of radio resources, the UE may determine a plurality of TOs by using only a first radio resource from thereamong. That is, a plurality of radio resources may be determined by selecting only the first radio resource from among given radio resources and repeating the corresponding radio resource a given number of times within a slot and/or for each slot.
> Method C3: When a row of a TDRA table indicated or configured with a radio resource of the corresponding CG configuration includes a repetition transmission factor (also called a repetition factor) indicating the number of times of repeated transmission, the UE may disregard the corresponding repetition factor.
> Method C4: When a UE configures and/or releases a radio resource of a certain CG configuration through activation DCI and/or release DCI, a PUSCH repetition transmission type configured for the corresponding DCI format and the number of repeated transmissions configured for such repetition transmission type may be disregarded.
> Method C5: When a UE retransmits a transport block transmitted on a radio resource of the corresponding CG configuration with dynamic PUSCH scheduling via DCI transmission, a PUSCH repetition transmission type configured for the corresponding DCI format and the number of repeated transmissions configured for such repetition transmission type may be disregarded. This may be limited to a case of CG PUSCH retransmission for a CG configuration using a plurality of radio resources.

When the UE determines CG PUSCH TO(s) through a CG configuration, especially when a plurality of TOs may be determined within a period by applying information regarding a plurality of given radio resources within a period, the UE may consider at least one of the following methods to obtain information regarding the plurality of radio resources to be allocated within the period.
> Method D1: The UE may expect that a row of a TDRA table including information about a plurality of radio resources are indicated or configured as radio resources that may all be allocated within the period of the corresponding CG configuration. In other words, when the UE is given a plurality of radio resources for a CG configuration, it may expect that the radio resources are indicated or configured such that the radio resources may all be allocated within a period assuming that the radio resources are allocated from a starting point of the periodicity of the CG configuration. For example, the UE may expect that the maximum size of a slot offset K2 configured for a plurality of radio resources may always be less than a periodicity of the corresponding CG configuration, or, when the maximum size of a slot offset K2 for a given radio resource is 0, the sum of a configured start symbol and a length of the radio resource may always be less than the periodicity.
> Method D2: When a row of a TDRA table, which is indicated or configured as a radio resource for the corresponding CG configuration, includes information related to a plurality of radio resources, and some of the radio resources have a slot offset K2 or symbol offset greater than a periodicity, the UE may determine a plurality of TOs by using only the radio resource(s) that do not have the slot offset K2 or symbol offset greater than the periodicity. That is, from among given radio resources, the radio resource(s) that may be included within the period may be determined as a plurality of radio resources for the CG configuration.
> Method D3: When a row of a TDRA table indicated or configured with a radio resource of the corresponding CG configuration includes a repeated transmission factor indicating the number of times of repeated transmission, the UE may disregard the corresponding repetition factor.
> Method D4: When a UE configures and/or releases a radio resource of a certain CG configuration through activation DCI and/or release DCI, a PUSCH repetition transmission type configured for the corresponding DCI format and the number of repeated transmissions configured for such repetition transmission type may be disregarded.
> Method D5: When a UE retransmits a transport block transmitted on a radio resource of the corresponding CG configuration with dynamic PUSCH scheduling via DCI transmission, a PUSCH repetition transmission type configured for the corresponding DCI format and the number of repeated transmissions configured for such repetition transmission type may be disregarded. This may be limited to a case of CG PUSCH retransmission in a CG configuration using a plurality of radio resources.

When one radio resource information is required for retransmission of a certain CG PUSCH, or when CG PUSCH retransmission is required through a plurality of radio resources, it may be considered that different operations are required for each CG configuration of the corresponding CG PUSCH. In this case, the following may be considered to consider the corresponding CG configuration in the retransmission DCI.
> Method E1: A HARQ process ID field in retransmission DCI may indicate a CG configuration index. A UE may assume that the corresponding retransmission DCI refers to retransmission of CG PUSCHs within the CG PUSCH period having an end time closest to a reception time of the corresponding retransmission DCI.
> Method E2: Retransmission of a CG configuration using a HARQ process ID may be performed through a HARQ process ID in retransmission DCI. When the retransmission DCI includes information regarding a plurality of radio resources, where each radio resource has an indicated HARQ process ID as X, a HARQ process ID offset of the corresponding CG configuration as Y, and the number of HARQ process IDs as Z, the HARQ process ID of the nth radio resource may be ((X-Y+N-1) mod Z) + Y

The following methods may be additionally considered.
> Method 1: A TDRA table may be separately configured, linked by RNTI (e.g., C-RNTI or CS-RNTI) and/or by CG configuration index.
   >> For example, a multi-PUSCH TDRA table may be configured for a specific CG configuration index, and a single-PUSCH TDRA table may be configured for another CG index.
   >> In the case of CG activation, a CG PUSCH resource may be allocated by interpreting a row in the TDRA table configured for the corresponding CG configuration index for the CG configuration index indicated through the HARQ configuration ID field in the activation DCI.
   >> In case of retransmission, when a single-PUSCH TDRA table is configured for at least one CG configuration index, the CG PUSCH retransmission is scheduled by interpreting the row in the single-PUSCH TDRA table, and when a multi-PUSCH TDRA table is configured for all CG configuration indexes, the first PUSCH occasion in the row in the TDRA table may be scheduled for the CG PUSCH retransmission. For example, to schedule retransmission with one radio resource, when a row of the TDRA table includes a plurality of radio resources (e.g., SLIVs), the first SLIV may be used for the retransmission of the CG PUSCH.
> Method 2: When at least one CG configuration index is configured to be a multi-PUSCH CG configuration, all CS-RNTI-based DCIs may always refer to the multi-PUSCH TDRA table.
   >> In case of CG activation, the first PUSCH occasion in the row of the multi-PUSCH TDRA table may be allocated as a CG PUSCH resource.
   >> In case of retransmission, the first PUSCH occasion in the row of the multi-PUSCH TDRA table may be scheduled for CG PUSCH retransmission.

In the above, the multi-PUSCH TDRA table may mean a TDRA table in which one or more (i.e., a plurality of) PUSCH occasions corresponding to transmissions of one or more (or a plurality of) different TBs are configured in one row.

In the above, the multi-PUSCH CG may mean a CG configuration index in which one or more (or a plurality of) PUSCH occasions corresponding to one or more (or a plurality of) different TB transmissions are configured within one CG period.

### <Implementation 5: Retransmission of SPS/CG with multiple occasions in period>

As described above, the UE may receive a semi-static configuration, which is needed to schedule a plurality of radio resources, from the BS through RRC signaling. The configured semi-static configuration indicating a plurality of radio resources may include a TDRA indicating a plurality of radio resources, a periodicity of a radio resource, a number or transmission time of radio resources, etc., which may configure a plurality of radio resources. Based on this information, the BS may transmit scheduling information for a plurality of radio resources to the UE, and the UE may receive the DCI and be allocated the plurality of radio resources. In particular, considering implementation 3, the UE may be configured with a semi-static radio resource having a plurality of radio resources within a period for SPS reception and CG transmission through the scheduling information.

In this case, it is possible to consider performing retransmissions for a plurality of SPS receptions and CG transmissions within a period through scheduling information for a plurality of radio resources. When N SPS PDSCH reception opportunities/occasions or N CG transmission opportunities/occasions are configured in a certain SPS/CG periodicity and DCI X for scheduling M radio resources is given to the UE for retransmission, for example, when the UE receives DCI format 0_0/0_1/0_2 with CRC scrambled by CS-RNTI with NDI = 1, for scheduling M radio resources, Implementation 5 may be used to retransmit a plurality of radio resources. Here, N >1 and M >=1.

The following needs to be determined for retransmission.
> Element 1: First radio resource to be retransmitted
> Element 2: Total number of radio resources to be retransmitted (e.g. 0 or multiple)
> Element 3: Radio resource over which each retransmission is performed

In the present implementation, at least one of the following methods may be used to determine element 1 (i.e., the first SPS PDSCH or CG PUSCH to be retransmitted).
> Method 5-1-1: SPS PDSCH or CG PUSCH related to the same HARQ process ID as the HARQ process ID indicated by DCI X
   >> In this case, it may be limited to a case in which, in a SPS/CG configuration related to the corresponding SPS PDSCH or CG PUSCH, a plurality of radio resources are configured within a period. For example, it may be limited to a case in which the RRC parameter indicating the number of a plurality of radio resources within a period is included in the SPS/CG configuration.
> Method 5-1-2: First SPS PDSCH or CG PUSCH in a periodicity (on the SPS/CG configuration) that includes SPS PDSCH or CG PUSCH related to the same HARQ process ID as HARQ process ID indicated by DCI X
   >> In this case, it may be limited to a case in which, in a SPS/CG configuration related to the corresponding SPS PDSCH or CG PUSCH, a plurality of radio resources are configured within a period. For example, it may be limited to a case in which the RRC parameter indicating the number of a plurality of radio resources within a period is included in the SPS/CG configuration.
> Method 5-1-3: When the last (or first) CG PUSCH transmission in any period of a CG configuration index that is identical to a HARQ process ID indicated by DCI X (i.e., having the same value as indicated by the HARQ process ID field in DCI X) is more than a time T away from a time of receiving DCI X, then the first CG PUSCH of the latest period.
   » The time T may be a value predefined as a propagation time between the BS and the UE after PUSCH transmission and a time required for the BS to receive and schedule the PUSCH, a value calculated by considering the capability of the UE, or a value indicated or configured through L1 or higher layer signaling of the BS.

In implementation 5, at least one of the following methods may be used to determine element 2 (e.g., the number of retransmission targets).
> When the SPS/CG configuration related to the first SPS PDSCH or CG PUSCH to be retransmitted is configured to have a plurality of radio resources within a period, for example, when an RRC parameter indicating the number of a plurality of radio resources within a period is included,
   >> When an RRC parameter indicating the number of a plurality of radio resources within the period is included, retransmission may be performed as many times as a value of the corresponding RRC parameter. When the corresponding value of the RRC parameter is K, K consecutive SPS PDSCH(s) or CG PUSCH(s) including the first SPS PDSCH or CG PUSCH to be retransmitted may be retransmitted.
   >> Alternatively, transmissions from the first SPS PDSCH or CG PUSCH to be retransmitted to the last radio resource of a period including a corresponding radio resource may be retransmitted.
> When DCI X indicates repeated transmission, retransmission may be performed for the corresponding number of repeated transmissions. When the number of repeated transmissions indicated by DCI X is K, K consecutive SPS PDSCHs or CG PUSCHs including the first SPS PDSCH or CG PUSCH to be retransmitted may be retransmitted. For example, when the SPS/CG configuration is configured to have a plurality of radio resources within a period, the number of repeated transmissions K indicated through the DCI X indicating retransmission scheduling for the same may mean that K SPS PDSCHs or CG PUSCHs including different TBs are (re)transmitted (rather than repeatedly transmitting the SPS PDSCH or CG PUSCH including the same TB K times).
> When DCI X indicates repeated transmission, retransmission may be performed by the maximum number of repeated transmissions. When the number of repeated transmissions indicated by DCI X is K, up to K SPS PDSCHs or CG PUSCHs may be retransmitted from the first SPS PDSCH or CG PUSCH to be retransmitted to the last radio resource of the period including the radio resource. For example, in this case, the number of SPS PDSCHs or CG PUSCHs from the first SPS PDSCH or CG PUSCH to be retransmitted to the last radio resource of the period including the radio resource may be less than or equal to K (i.e., K or less).
> When the number M of radio resources indicated by DCI X is greater than 1, for example, when one FDRA and M TDRAs are given by DCI X, retransmissions may be performed for as many radio resources as M. When the number of radio resources indicated by DCI X is M, M consecutive SPS PDSCHs or CG PUSCHs including the first SPS PDSCH or CG PUSCH to be retransmitted may be retransmitted.
> When the number M of radio resources indicated by DCI X is greater than 1, for example, when one FDRA and M TDRAs are given by DCI X, retransmissions may be performed for up to M radio resources. When the number of radio resources indicated by DCI X is M, up to M SPS PDSCHs or CG PUSCHs may be retransmitted from the first SPS PDSCH or CG PUSCH to be retransmitted to the last radio resource of the period including the radio resource. For example, in this case, the number of SPS PDSCHs or CG PUSCHs from the first SPS PDSCH or CG PUSCH to be retransmitted to the last radio resource of the period including the radio resource may be less than or equal to M (i.e., M or less).

The method for determining the element 2 may be used only in a case in which DCI X indicates retransmission for a plurality of radio resources. The following method may be used to indicate that DCI X indicates retransmission on a plurality of radio resources.
> For DCI X, a separate DCI format may be used for retransmission over a plurality of radio resources.
> A CRC of DCI X is scrambled with a separate RNTI that indicates retransmissions on a plurality of radio resources.
> DCI X may include a specific MCS field value that indicates retransmission for a plurality of radio resources. In this case, reserved bit(s) of the MCS table in the conventional standard may be used, and in this case, retransmission may be performed with the same MCS value as a value used for SPS PDSCH reception or CG PUSCH transmission.
> DCI X may include a specific FDRA field value that indicates retransmission for a plurality of radio resources. In this case, reserved bit(s) that are not used as an FDRA value in the conventional standard, for example, a value of all zeros in the case of resource allocation (RA) type 0, a value of all 1's or a value of (All 1's - 1) in the case of RA type 1 may be used, and in this case, retransmission may be performed with the same FDRA value as a value used for SPS PDSCH reception or CG PUSCH transmission.

In implementation 5, at least one of the following methods may be used to determine element 3 (e.g., radio resource in which each retransmission is performed).
> The radio resource on which the first retransmission is performed may be the radio resource indicated by DCI X.
> The same radio resource may be used in consecutive slot(s) from a slot in which the radio resource indicated by DCI X is located may be used as the radio resource after the first retransmission. That is, when an index of the slot in which the radio resource indicated by DCI X is located is T, an n-th radio resource may be obtained by using the same radio resource in a T+n-1 slot.
> The same radio resource may be used in consecutive valid slot(s) from a slot in which the radio resource indicated by DCI X is located may be used as the radio resource after the first retransmission. That is, when an index of the slot in which a radio resource Y indicated by DCI X is located is Z, an nth radio resource may be obtained by using the same radio resource in an (n-1)-th slot from among slots in which the radio resource Y is valid from a slot Z.
   >> To determine whether a corresponding slot is valid for a certain radio resource, a semi-statically configured slot format may be considered. For example, in case of retransmission of a CG PUSCH, when a symbol within a slot used in a radio resource is RRC configuration *tdd-UL-DL-ConfigurationCommon* or is provided, the symbol may be indicated as a DL symbol via RRC configuration *tdd-UL-DL-ConfigurationDedicated,* or in the case of a symbol used in an SS/PBCH block with an index provided by the RRC parameter *ssb-PositionInBurst* or a symbol used in CORESET for a type 0-PDCCH CSS, it may be determined as invalid, otherwise it may be determined as valid. As another example, in case of retransmission of a CG PUSCH, when the symbol within the slot used in the radio resource is *tdd-UL-DL-ConfigurationCommon* or is provided, the symbol may be indicated as a UL symbol by *tdd-UL-DL-ConfigurationDedicated,* or in the case of a symbol used between a valid PRACH occasion and a symbol gap indicated in Table 8.1-2 of 3GPP TS 38.213 from the corresponding occasion, it may be determined as invalid, otherwise it may be determined as valid.

In implementation 5, each of the plurality of retransmitted radio resources may be limited to valid radio resources. That is, the UE may consider only a valid radio resource from among the configured SPS/CG radio resources as a target for retransmission. The corresponding radio resource may be retransmitted regardless of whether the radio resource is actually transmitted.

The implementations 1 to 5 described above may be applied alone or in combination of two or more.

According to some implementations of the present disclosure, the BS may configure a plurality of radio resources to a UE through one DCI and configure each radio resource to use different transmission parameters, such as different MCS values, to mitigate performance degradation due to channel estimation errors. According to some implementations of the present disclosure, the UE may perform PDSCH receptions or PUSCH transmissions on radio resources allocated by the BS. According to some implementations of the present disclosure, the UE may obtain lower latency by transmitting HARQ-ACK responses for received/scheduled PDSCHs based on a single scheduling message (e.g., DCI).

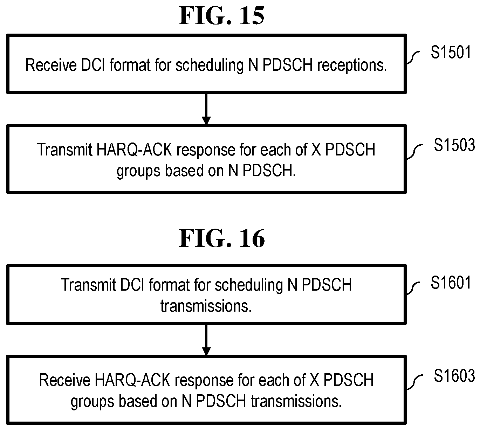

FIG. 15 illustrates a UL signal transmission flow of a UE according to some implementations of the present disclosure.

The UE may perform operations according to some implementations of the present disclosure in association with downlink signal reception. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure. The computer program or the computer program product may be recorded in at least one computer-readable (non-transitory) storage medium and may include instructions that, when executed, cause (at least one processor) to perform operations according to some implementations of the present disclosure.

Referring to FIG. 15, in the UE, the processing device, the computer-readable (non-transitory) storage medium, and/or the computer program product, the operations may include receiving a DCI format for scheduling N PDSCH receptions (S1501), where N>1, determining HARQ-ACK information bits for the N PDSCH receptions based on the DCI format, and transmitting the HARQ-ACK information based on the HARQ-ACK information bits. In some implementations of the present disclosure, for example, according to Alt. 1 or Alt. 2 of Implementation 2, the N PDSCH receptions may be divided into X PDSCH groups, where X<N. The transmitting of the HARQ-ACK information may include transmitting HARQ-ACK information for each PDSCH group in a slot determined by applying K1 based on the last PDSCH reception within the corresponding PDSCH group (S1503).

In some implementations, the operations may include determining a HARQ-ACK response period k based on the DCI format. The transmitting of the HARQ-ACK information for each PDSCH group may include transmitting the HARQ-ACK information for each PDSCH group of k PDSCH receptions.

In some implementations, the DCI format may include a PRI field, and the HARQ-ACK information for each PDSCH group may be transmitted using a PUCCH resource determined based on a value of the PRI field.

In some implementations, the DCI format may include information regarding the number X of PRIs. The transmitting of the HARQ-ACK information for each PDSCH group may include transmitting HARQ-ACK information for an i-th PDSCH group from among the X PDSCH groups based on a PUCCH resource for the i-th PDSCH group. The PUCCH resource for the i-th PDSCH group may be determined based on the (i mod Y)-th PRI value within a predetermined PRI sequence of length Y.

In some implementations, the DCI format may include a PRI field, and the PRI field may include a value indicating the PRI sequence configured by higher layer signaling.

FIG. 16 illustrates an uplink signal reception flow of a BS according to some implementations of the present disclosure.

The BS may perform operations according to some implementations of the present disclosure in association with downlink signal transmission. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

Referring to FIG. 16, in the BS, the processing device, the computer-readable (non-transitory) storage medium, and/or the computer program product, the operations may include transmitting a DCI format for scheduling N PDSCH transmissions (S1601), where N>1, and receiving HARQ-ACK information bits for the N PDSCH transmissions based on the DCI format. In some implementations of the present disclosure, for example, according to Alt. 1 or Alt. 2 of Implementation 2, the N PDSCH receptions may be divided into X PDSCH groups, where X<N, and the receiving of the HARQ-ACK information bits may include receiving HARQ-ACK information for each PDSCH group in a slot determined by applying K1 based on the last PDSCH transmission within the corresponding PDSCH group (S1603).

In some implementations, the operations may include determining a HARQ-ACK response period k based on the DCI format. The receiving of the HARQ-ACK information for each PDSCH group may include receiving the HARQ-ACK information for each PDSCH group of k PDSCH transmissions.

In some implementations, the DCI format may include a PRI field, and the HARQ-ACK information for each PDSCH group may be received using a PUCCH resource determined based on a value of the PRI field.

In some implementations, the DCI format may include information regarding the number X of PRIs. The receiving of the HARQ-ACK information for each PDSCH group may include receiving HARQ-ACK information for an i-th PDSCH group from among the X PDSCH groups based on a PUCCH resource for the i-th PDSCH group. The PUCCH resource for the i-th PDSCH group may be determined based on the (i mod Y)-th PRI value within a predetermined PRI sequence of length Y.

In some implementations, the DCI format may include a PRI field, and the PRI field may include a value indicating the PRI sequence configured by higher layer signaling.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method of transmitting hybrid automatic repeat request acknowledgement (HARQ-ACK) information by a user equipment (UE) in a wireless communication system, the method comprising:
receiving a downlink control information (DCI) format for scheduling N physical downlink shared channel (PDSCH) receptions, where N>1;
determining HARQ-ACK information bits for the N PDSCH receptions based on the DCI format; and
transmitting the HARQ-ACK information based on the HARQ-ACK information bits,
wherein the N PDSCH receptions are divided into X PDSCH groups, where X<N, and
wherein the transmitting of the HARQ-ACK information includes:
transmitting HARQ-ACK information for each PDSCH group in a slot determined by applying K1 based on a last PDSCH reception in a corresponding PDSCH group.

2. The method of claim 1, further comprising:
determining a HARQ-ACK response period k based on the DCI format,
wherein the transmitting of the HARQ-ACK information for each PDSCH group includes transmitting the HARQ-ACK information for each PDSCH group every PDSCH group of k PDSCH receptions.

3. The method of claim 1, wherein the DCI format includes a physical uplink control channel (PUCCH) resource indicator (PRI) field, and
wherein the HARQ-ACK information for each PDSCH group is transmitted using a PUCCH resource determined based on a value of the PRI field.

4. The method of claim 1, wherein the DCI format includes information regarding a number X of physical uplink control channel (PUCCH) resource indicators (PRIs),
wherein the transmitting of the HARQ-ACK information for each PDSCH group includes transmitting HARQ-ACK information for an i-th PDSCH group from among the X PDSCH groups based on a PUCCH resource for the i-th PDSCH group, and
wherein the PUCCH resource for the i-th PDSCH group is determined based on an (i mod Y)-th PRI value within a predetermined PRI sequence of a length Y.

5. The method of claim 4, wherein the DCI format includes a PRI field, and
wherein the PRI field includes a value indicating the PRI sequence configured by higher layer signaling.

6. A user equipment (UE) for transmitting hybrid automatic repeat request acknowledgement (HARQ-ACK) information in a wireless communication system, the UE comprising:
at least one transceiver;
at least one processor; and
at least one computer memory operably connected to the at least one processor and storing instructions that, when executed, cause the at least one processor to perform operations including:
receiving a downlink control information (DCI) format for scheduling N physical downlink shared channel (PDSCH) receptions, where N>1;
determining HARQ-ACK information bits for the N PDSCH receptions based on the DCI format; and
transmitting the HARQ-ACK information based on the HARQ-ACK information bits,
wherein the N PDSCH receptions are divided into X PDSCH groups, where X<N, and
wherein the transmitting of the HARQ-ACK information includes:
transmitting HARQ-ACK information for each PDSCH group in a slot determined by applying K1 based on a last PDSCH reception in a corresponding PDSCH group.

7. A processing device in a wireless communication system, the processing device comprising:
at least one processor; and
at least one computer memory operably connected to the at least one processor and storing instructions that, when executed, cause the at least one processor to perform operations including:
receiving a downlink control information (DCI) format for scheduling N physical downlink shared channel (PDSCH) receptions, where N>1;
determining HARQ-ACK information bits for the N PDSCH receptions based on the DCI format; and
transmitting HARQ-ACK information based on the HARQ-ACK information bits,
wherein the N PDSCH receptions are divided into X PDSCH groups, where X<N, and
wherein the transmitting of the HARQ-ACK information includes:
transmitting HARQ-ACK information for each PDSCH group in a slot determined by applying K1 based on a last PDSCH reception in a corresponding PDSCH group.

8. A computer-readable storage medium storing at least one computer program code including instructions that, when executed, cause at least one processor to perform operations, the operations comprising:
receiving a downlink control information (DCI) format for scheduling N physical downlink shared channel (PDSCH) receptions, where N>1;
determining HARQ-ACK information bits for the N PDSCH receptions based on the DCI format; and
transmitting HARQ-ACK information based on the HARQ-ACK information bits,
wherein the N PDSCH receptions are divided into X PDSCH groups, where X<N, and
wherein the transmitting of the HARQ-ACK information includes:
transmitting HARQ-ACK information for each PDSCH group in a slot determined by applying K1 based on a last PDSCH reception in a corresponding PDSCH group.

9. A method of receiving hybrid automatic repeat request acknowledgement (HARQ-ACK) information by a base station (BS) in a wireless communication system, the method comprising:
transmitting a downlink control information (DCI) format for scheduling N physical downlink shared channel (PDSCH) receptions, where N>1; and
receiving HARQ-ACK information bits for the N PDSCH receptions based on the DCI format,
wherein the N PDSCH receptions are divided into X PDSCH groups, where X<N, and
wherein the receiving of the HARQ-ACK information includes:
receiving HARQ-ACK information for each PDSCH group in a slot determined by applying K1 based on a last PDSCH reception in a corresponding PDSCH group.

10. A base station (BS) for receiving hybrid automatic repeat request acknowledgement (HARQ-ACK) information in a wireless communication system, the BS comprising:
at least one transceiver;
at least one processor; and
at least one computer memory operably connected to the at least one processor and storing instructions that, when executed, cause the at least one processor to perform operations including:
transmitting a downlink control information (DCI) format for scheduling N physical downlink shared channel (PDSCH) transmissions, where N>1; and
receiving HARQ-ACK information bits for the N PDSCH transmissions based on the DCI format,
wherein the N PDSCH receptions are divided into X PDSCH groups, where X<N, and
wherein the receiving of the HARQ-ACK information includes:
receiving the HARQ-ACK information for each PDSCH group in a slot determined by applying K1 based on a last PDSCH transmission in a corresponding PDSCH group.

11. The BS of claim 10, wherein the operations include:
determining a HARQ-ACK response period k based on the DCI format, and
wherein the receiving of the HARQ-ACK information for each PDSCH group includes receiving the HARQ-ACK information for each PDSCH group every PDSCH group of k PDSCH transmissions.

12. The BS of claim 10, wherein the DCI format includes a physical uplink control channel (PUCCH) resource indicator (PRI) field, and
wherein the HARQ-ACK information for each PDSCH group is received using a PUCCH resource determined based on a value of the PRI field.

13. The BS of claim 10, wherein the DCI format includes information regarding a number X of physical uplink control channel (PUCCH) resource indicators (PRIs),
wherein the receiving of the HARQ-ACK information for each PDSCH group includes receiving HARQ-ACK information for an i-th PDSCH group from among the X PDSCH groups based on a PUCCH resource for the i-th PDSCH group, and
wherein the PUCCH resource for the i-th PDSCH group is determined based on an (i mod Y)-th PRI value within a predetermined PRI sequence of a length Y.

14. The BS of claim 13, wherein the DCI format includes a PRI field, and
wherein the PRI field includes a value indicating the PRI sequence configured by higher layer signaling.
